# EUROPEAN PATENT SPECIFICATION

(11) **EP 3 644 289 B1**
(45) Date of publication and mention of the grant of the patent: **01.01.2025**
(21) Application number: 19198670.2
(22) Date of filing: 20.09.2019
(51) Int. Cl.: G07G 1/00, G06Q 20/18, G06Q 20/20, G06Q 20/32, G06Q 20/36

(54) **CHECKOUT SYSTEM AND CHECKOUT METHOD**
KASSENSYSTEM UND KASSENVERFAHREN
SYSTÈME ET PROCÉDÉ DE CAISSE

(30) Priority: 26.10.2018 JP 2018201809
(43) Date of publication of application: 29.04.2020
(73) Proprietor: Toshiba Tec Kabushiki Kaisha, 141-8562 Tokyo (JP)
(72) Inventor: MORI, Haruki, Shinagawa-ku, Tokyo 141-8562 (JP)
(74) Representative: Bandpay & Greuter

(56) References cited:
- US-A1- 2016 203 680
- US-A1- 2017 046 707

## Description

### FIELD

Embodiments relate to a checkout system and a method performed by the checkout system.

### BACKGROUND

In recent years, a cart POS (Point Of Sales) system has been proposed for a retail store equipped with a shopping cart. The system includes an information terminal having a touch panel and a scanner on a shopping cart. When a customer using the shopping cart puts a commodity to be purchased on the shopping cart, the scanner reads the identification code of the commodity and performs commodity registration. In this way, the cart POS system performs commodity registration while the customer is shopping so that the congestion at a checkout counter is alleviated.

Further, there has been proposed a technique in which a checkout device capable of performing a checkout process by a payment card is attached to a shopping cart, and the shopping cart can perform the checkout process for commodities to be purchased, thereby eliminating the need for a cash register. However, in this technique, a payment device must be further attached to the shopping cart having a touch panel, a scanner, or the like. Therefore, various devices must be attached to the limited space of the shopping cart, which may deteriorate the operability thereof Further, since the information terminal must be also attached to many shopping carts, it is inevitable that the system cost is increased.

Document US 2016/0203680 A1 discloses method for processing a purchase transaction using a plurality of transaction systems.

### SUMMARY OF INVENTION

To solve such problem, there is provided a checkout system according to the appended claims.
notification to the information processing apparatus, wherein the first processor is configured to upon receipt of the first data from the mobile terminal, calculate an amount of payment based on the received first data, acquire second data about payment set for the customer in advance, and upon receipt of the first notification from the mobile terminal, perform a checkout process based on the first and second data.

Preferably, the second data indicates a plurality of payment methods used by the customer, and the first processor is configured to control the first interface to transmit to the mobile terminal a request to select one of the payment methods.

Preferably still, the mobile terminal further comprises a display device, and upon receipt of the request, the second processor is configured to control the display device to display a list of the payment methods.

Preferably yet, the input device is configured to receive a third input of selecting one of the payment methods, upon receipt of the third input, the second processor transmits third data indicating the selected payment method to the information processing apparatus, and the checkout process is performed by the selected payment method indicated by the third data.

Suitably, the second data indicates a balance of an electronic money used by the customer.

Suitably still, the mobile terminal further comprises a display device, the first processor is configured to control the first interface to transmit fourth data indicating the balance to the mobile terminal, and upon receipt of the fourth data, the second processor is configured to control the display device to display the balance.

Suitably yet, the first processor is configured to perform the checkout process by the electronic money only when the balance is greater than the amount of payment.

Typically, upon completion of the checkout process, the first processor is configured to control the first interface to transmit a second notification to the mobile terminal.

Typically still, the mobile terminal further comprises a display device, and upon receipt of the second notification, the second processor is configured to control the display device to display a screen indicating that the checkout process has been completed.

Typically yet, the mobile terminal is installed on a shopping cart.

The invention also relates to a method performed by a checkout system including an information processing apparatus and a mobile terminal, the method comprising: receiving, by the mobile terminal, a first input of first data of a commodity to be purchased by a customer; calculating, by the information processing apparatus, an amount of payment based on the first data; acquiring, by the information processing apparatus, second data about payment set for the customer in advance; receiving, by the mobile terminal, a second input for executing a checkout process; and upon receipt of the second input, performing, by the information processing apparatus, a checkout process based on the first and second data.

Preferably, the second data indicates a plurality of payment methods used by the customer, and the method further comprises displaying on the mobile terminal a list of the payment methods.

Preferably still, the method further comprises: receiving, by the mobile terminal, a third input of selecting one of the payment methods, wherein the checkout process is performed further based on the selected payment method.

Preferably yet, the second data indicates a balance of an electronic money used by the customer.

Typically, the method further comprises: displaying the balance on the mobile terminal.

Typically still, the checkout process is performed by the electronic money only when the balance is greater than the amount of payment.

Typically yet, the method further comprises:upon completion of the checkout process, displaying on the mobile terminal a screen indicating that the checkout process has been completed.

Suitably, the mobile terminal is installed on a shopping cart.

Suitably still, the receiving of the first input comprises scanning a code of a commodity to be purchased by the customer.

Suitably yet, the scanning is performed by a scanner attached to a shopping cart.

The invention also concerns a computer program comprising instructions which, when the program is executed by a computer, cause the computer to carry out the steps of the method described above.

### DESCRIPTION OF THE DRAWINGS

The above and other objects, features and advantages of the present
invention will be made apparent from the following description of the preferred embodiments, given as non-limiting examples, with reference to the accompanying drawings, in which:
FIG. 1 is a schematic diagram of a cart POS system according to one embodiment.
FIG. 2 is a schematic diagram showing a data structure of a member record.
FIG. 3 is a schematic diagram showing a data structure of an electronic money record.
FIG. 4 is a block diagram showing a circuit configuration of an information terminal.
FIG. 5 is a perspective view showing an example of a shopping cart provided with the information terminal.
FIG. 6 is a block diagram showing a circuit configuration of a virtual POS server.
FIG. 7 is a schematic diagram showing an example of a data structure of shopping cart data.
FIG. 8 is a flowchart illustrating a procedure performed by the information terminal according to the embodiment.
FIG. 9 is a flowchart illustrating a procedure performed by the information terminal according to the embodiment.
FIG. 10 is a flowchart illustrating a procedure performed by the virtual POS server in response to receipt of a login command.
FIG. 11 is a flowchart illustrating a procedure performed by the virtual POS server in response to receipt of a commodity registration command.
FIG. 12 is a flowchart illustrating a procedure performed by the virtual POS server in response to receipt of a checkout command.
FIG. 13 is a flowchart illustrating a procedure performed by the virtual POS server in response to receipt of the checkout command.

### DETAILED DESCRIPTION

A checkout system according to one embodiment comprises an information processing apparatus that comprises a first processor and a first network interface; and a mobile terminal that comprises an input device configured to receive a first input of first data of a commodity to be purchased by a customer and a second input for executing a checkout process, a second network interface, and a second processor configured to, upon receipt of the first input, control the second network interface to transmit the first data to the information processing apparatus, and upon receipt of the second input, control the second network interface to transmit a first notification to the information processing apparatus. The first processor is configured to, upon receipt of the first data from the mobile terminal, calculate an amount of payment based on the received first data, acquire second data about payment set for the customer in advance, and, upon receipt of the first notification from the mobile terminal, perform a checkout process based on the first and second data.

Hereinafter, various embodiments will be described in detail with reference to the accompanying drawings, but the present invention is not limited to those embodiments. The embodiments are applied to a cart POS system.

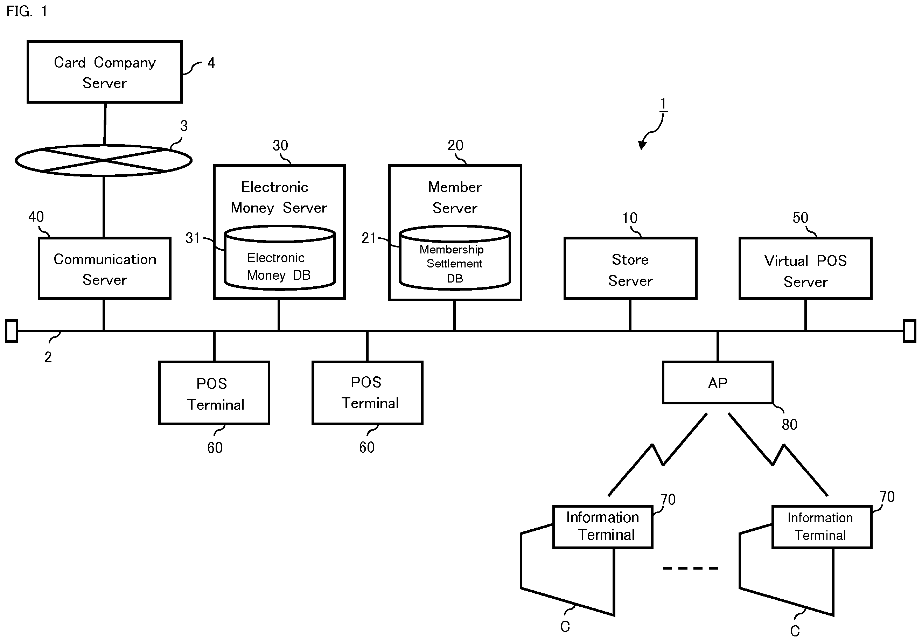

FIG. 1 is a schematic diagram of a cart POS system 1 according to one embodiment. The cart POS system 1 includes a store server 10, a member server 20, an electronic money server 30, a communication server 40, a virtual POS server 50, a plurality of POS terminals 60, a plurality of information terminals 70, and an access point (AP) 80.

The store server 10, the member server 20, the electronic money server 30, the communication server 40, the virtual POS server 50, the POS terminals 60, and the AP 80 are connected to a network 2 such as a LAN (Local Area Network).

Each of the information terminals 70 is a device that enables a customer to input data for registration of commodities to be purchased. The information terminal 70 is provided on a shopping cart C. Hereinafter, the shopping cart C will be simply referred to as a cart C. One information terminal 70 is provided on each of a plurality of carts C in a store.

Each information terminal 70 has a wireless communication unit (wireless unit). The information terminal 70 performs wireless communication with the AP 80. The AP 80 relays communication between each apparatus connected to the network 2, i.e., the store server 10, the member server 20, the electronic money server 30, the communication server 40, the virtual POS server 50, the POS terminals 60, and the information terminals 70. Although only one AP 80 is shown in FIG. 1, two or more APs may be provided depending on the size of the store or the like.

Each of the POS terminals 60 is a device which enables a store clerk or a customer to start a checkout process for commodities to be purchased. The POS terminal 60 is a well-known self POS terminal. The POS terminal 60 may be a well-known face-to-face POS terminal. The number of the POS terminals 60 is not particularly limited. In FIG. 1, two POS terminals 60 are installed in the cart POS system 1 in one store.

The store server 10 performs operations related to store jobs. The store server 10 stores a commodity database, a sales database, and the like for the purpose of performing the operations. The commodity database stores commodity records including commodity data for each commodity sold in the store. The commodity data includes a commodity code, a price, a commodity name, and the like. The commodity code is an identification code of the commodity. The sales database stores sales records representing sales data for each item such as a commodity, a department, a time zone, a date, a week, and a month. The sales data includes the quantity of sold commodities, the amount of sales, and the like.

The member server 20 performs operations related to a purchase made by a member who has completed membership registration with the member server 20. The member server 20 stores a member database, a member checkout database 21, and so on. The member database stores member records including member data for each member. The member data includes a member ID, a name, a sex, an e-mail address, and the like. The member ID is an identification code of the member. The member checkout database 21 stores a member record 21R including data necessary for payment by each member.

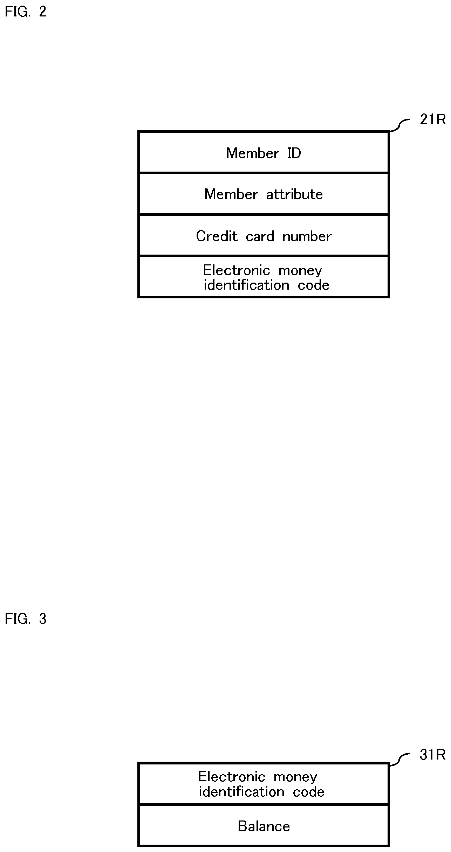

FIG. 2 is a schematic diagram showing a data structure of the member record 21R. As shown in the figure, the member record 21R includes, in addition to the member ID, a member attribute, a credit card number, and an electronic money identification code, as the data necessary for payment by the member.

The member attribute represents an attribute of a payment method in the case where the member does not make payment using the POS terminal 60. In this embodiment, the payment method in the case where the member does not use the POS terminal 60 is limited to two types, that is, payment by a credit card or an electronic money. In this embodiment, the attribute of the member who makes payment by any one of the credit card and the electronic money is represented by "11", the attribute of the member who makes payment only by the electronic money is represented by "10", the attribute of the member who makes payment only by the credit card is represented by "10", and the attribute of the member who makes payment not using the credit card and electronic money is represented by "00".

The credit card number is a card number of a credit card registered in advance and used for payment by the member identified by the member ID. The member record 21R for the member having the member attribute "01" or "11" has a credit card number registered therein. The credit card number is not registered in the member record 21R for the member having the member attribute "00" or "10".

The electronic money identification code is an identification code of electronic money registered in advance and used for payment by the member identified by the member ID. An electronic money identification code is registered in the member record 21R for the member having the member attribute "10" or "11". The electronic money identification code is not registered in the member record 21R for the member having the member attribute "00" or "01".

Returning to the description of FIG. 1, the electronic money server 30 performs operations related to a checkout process made by electronic money. For this purpose, the electronic money server 30 stores the electronic money database 31. The electronic money database 31 stores the electronic money record 31R including data related to the electronic money for each registered customer.

FIG. 3 is a schematic diagram showing a data structure of the electronic money record 31R. As shown in FIG. 2, the electronic money record 31R includes an electronic money identification code and a balance related to electronic money. The electronic money identification code is an identification code of electronic money to be used by the registered customer. The balance is the balance of the electronic money specified by the corresponding electronic money identification code.

Returning to the description of FIG. 1, the communication server 40 performs data communication between the POS terminal 60 or the virtual POS server 50 and the card company server 4 via a network 3 dedicated for credit transaction.

The virtual POS server 50 cooperates with the information terminal 70 to cause the information terminals 70 to function as POS terminals.

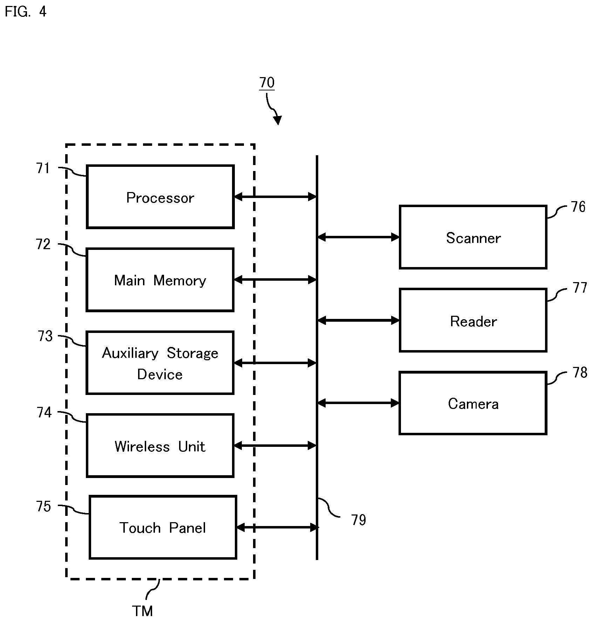

FIG. 4 is a block diagram showing a circuit configuration of the information terminal 70. The information terminal 70 includes a processor 71, a main memory 72, an auxiliary storage device 73, a wireless unit 74, a touch panel 75, a scanner 76, a reader 77, a camera 78, and a system transmission line 79. The system transmission line 79 includes an address bus, a data bus, a control signal line, and the like. In the information terminal 70, the processor 71, the main memory 72, the auxiliary storage device 73, the wireless unit 74, the touch panel 75, the scanner 76, the reader 77, and the camera 78 are connected to each other via the system transmission line 79.

The processor 71 corresponds to a central part of the computer. The processor 71 controls each unit to perform various functions of the information terminal 70 in accordance with the operating system or the application program. The processor 71 is, for example, a central processing unit (CPU).

The main memory 72 includes a nonvolatile memory region and a volatile memory region. The main memory 72 stores the operating system or an application program in the nonvolatile memory area. The main memory 72 may store in the nonvolatile or the volatile memory area data necessary for the processor 71 to execute operations for controlling the respective units. The main memory 72 uses the volatile memory area as a work area in which data is appropriately rewritten by the processor 71. The nonvolatile memory area is, for example, a ROM (Read Only Memory), and the volatile memory area is, for example, a random access memory (RAM).

The auxiliary storage device 73 is, for example, an EEPROM (Electric Erasable Programmable Read-Only Memory), an HDD (Hard Disc Drive), an SSD (Solid State Drive), or the like. The auxiliary storage device 73 stores data used by the processor 71 to perform various processes, data generated by the processor 71, and the like. The auxiliary storage device 73 may store the application programs described above.

The wireless unit 74 performs wireless data communication with the AP 80 according to a wireless communication protocol.

The touch panel 75 of the information terminal 70 has both an input device and a display device. The touch panel 75 detects a touch position with respect to an image displayed on the display device, and outputs the touch position information to the processor 71.

The scanner 76 reads a code symbol, such as a barcode and a two dimensional data code, attached to a commodity. A code symbol representing the commodity code is attached to the commodity. The scanner 76 outputs the data of the read code symbol to the processor 71. The scanner 76 may be a type that reads code symbols by scanning laser light, or may be a type that reads code symbols from an image captured by an imaging device.

The reader 77 reads data recorded on a recording medium and outputs the read data to the processor 71. The reader 77 is a magnetic card reader when a magnetic card is used as the recording medium or an IC card reader when a contact type IC card is used as the recording medium. The reader 77 is an RFID reader in the case of the recording medium using RFID (Radio Frequency Identification) such as a non-contact IC card or a smart phone.

The camera 78 is provided on the cart C so that the basket placed on a basket receiving portion of the cart C can be photographed from above. The camera 78 monitors whether or not the customer using the cart C correctly puts a commodity to be purchased into the basket.

In the information terminal 70 provided with the circuit components described above, the processor 71, the main memory 72, the auxiliary storage device 73, the wireless unit 74, and the touch panel 75 are arranged in a tablet terminal TM. The information terminal 70 is configured by electrically connecting the scanner 76, the reader 77, and the camera 78 to the tablet terminal TM.

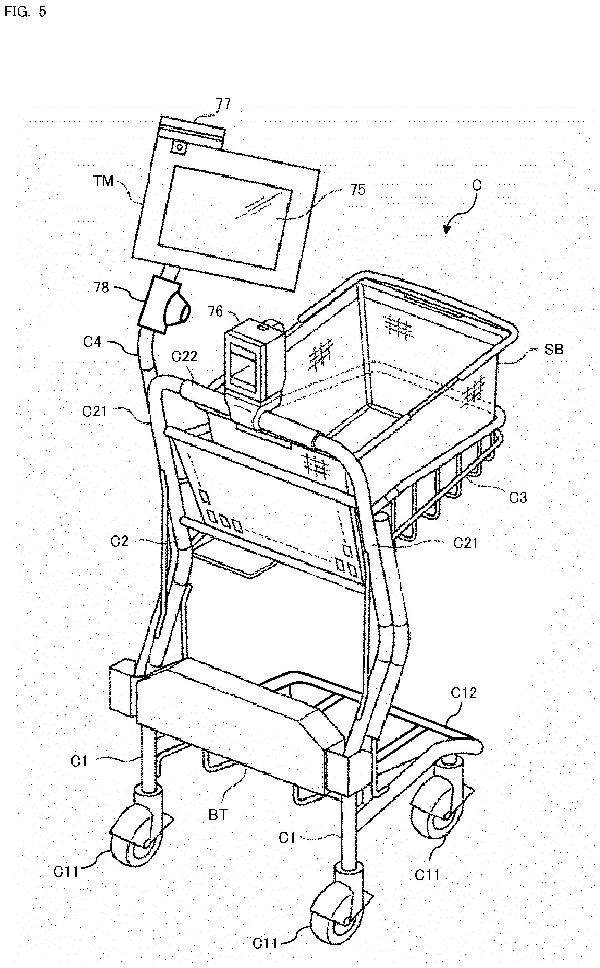

FIG. 5 is a perspective view showing an example of the cart C provided with the information terminal 70. The cart C includes a caster portion C1 for movement, a handle frame portion C2, and a basket receiving portion C3. The caster portion C1 has four wheels C11 for smoothly moving the caster portion C1 on the floor surface. The caster portion C1 is provided with a receiving portion C12 for placing a large commodity that cannot be put into a shopping basket SB. The handle frame portion C2 includes a pair of vertical frames C21 erected on the rear wheel side of the caster portion C1, and a handlebar C22 connecting the upper ends of the vertical frames C21. The basket receiving portion C3 is located forward from a middle portion of the handle frame portion C2. The shopping basket SB is used for storing commodities and placed on the basket receiving part C3 of the cart C.

The scanner 76 is located at an intermediate portion of the handlebar C22 so that the customer can hold both ends of the handlebar C22. The scanner 76 is attached to the handlebar C22 so that the reading window is positioned on the front side.

A pole C4 is attached to one longitudinal frame C21. A tip of the pole C4 is positioned above the handlebar C22. The tablet terminal TM is attached to the tip portion of the pole C4, with the screen of the touch panel 75 placed in front. The reader 77 is attached to the tablet terminal TM so that the card slit is positioned on the front side. In FIG. 5, the reader 77 is used as a magnetic card reader. The camera 78 is attached to an intermediate portion of the pole C4 so as to capture an image of the entire shopping basket SB placed in the basket receiving portion C3 from above.

A battery BT is attached to the lower end side of the handle frame portion C2 between the vertical frames C21. The battery BT supplies power to the tablet terminal TM, the scanner 76, the reader 77, and the camera 78.

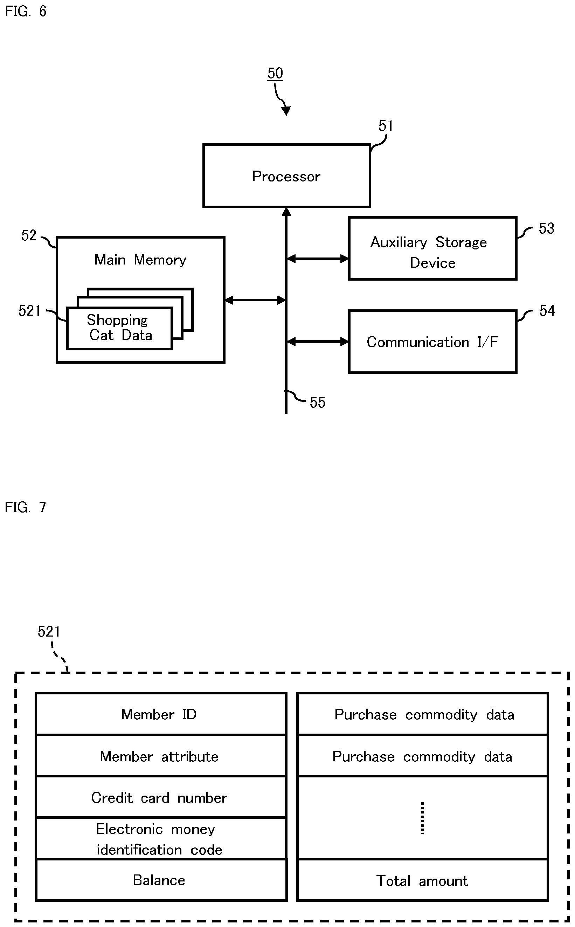

FIG. 6 is a block diagram showing a circuit configuration of the virtual POS server 50. The virtual POS server 50 includes a processor 51, a main memory 52, an auxiliary storage device 53, a communication interface (I/F) 54, and a system transmission line 55. The system transmission line 55 includes an address bus, a data bus, a control signal line, and the like. The processor 51, the main memory 52, the auxiliary storage device 53, and the communication interface 54 are connected to each other via the system transmission line 55.

The processor 51 corresponds to the central part of the computer. The processor 51 controls each unit to perform various functions of the virtual POS server 50 in accordance with the operating system or the application programs. The processor 51 is, for example, a CPU.

The main memory 52 includes a nonvolatile memory region and a volatile memory region. The main memory 52 stores the operating system or application programs in the nonvolatile memory area. The main memory 52 may store in the nonvolatile or volatile memory area data necessary for the processor 51 to execute operations for controlling the respective units. The main memory 52 uses the volatile memory area as a work area in which data is appropriately rewritten by the processor 51. The nonvolatile memory area is, for example, a ROM, and the volatile memory area is, for example, a RAM.

The auxiliary storage device 53 is, for example, an EEPROM, an HDD, an SSD, or the like. The auxiliary storage device 53 stores data used by the processor 51 to perform various processes, data generated by the processor 51, and the like. The auxiliary storage device 53 may store the application programs described above.

The communication interface 54 is connected to the network 2. The communication interface 54 performs data communication with another device connected via the network 2 according to a communication protocol.

In the virtual POS server 50 having such a configuration, a part of the volatile memory area in the main memory 52 is used as a memory area for storing shopping cart data 521. The virtual POS server 50 is capable of creating in the volatile memory area a plurality of memory areas for storing different shopping cart data 521.

FIG. 7 is a schematic diagram showing an example of a data structure of the shopping cart data 521. As shown in FIG. 7, the shopping cart data 521 includes a member ID, a member attribute, a credit card number, an electronic money identification code, a balance, one or more pieces of purchase commodity data, and the total amount of payment. Each purchase commodity data includes a commodity code, a commodity name, a unit price, a quantity, a subtotal, a tax, and the like of a commodity to be purchased by a customer. The total amount is the sum of the subtotal and the tax included in each purchase product data.

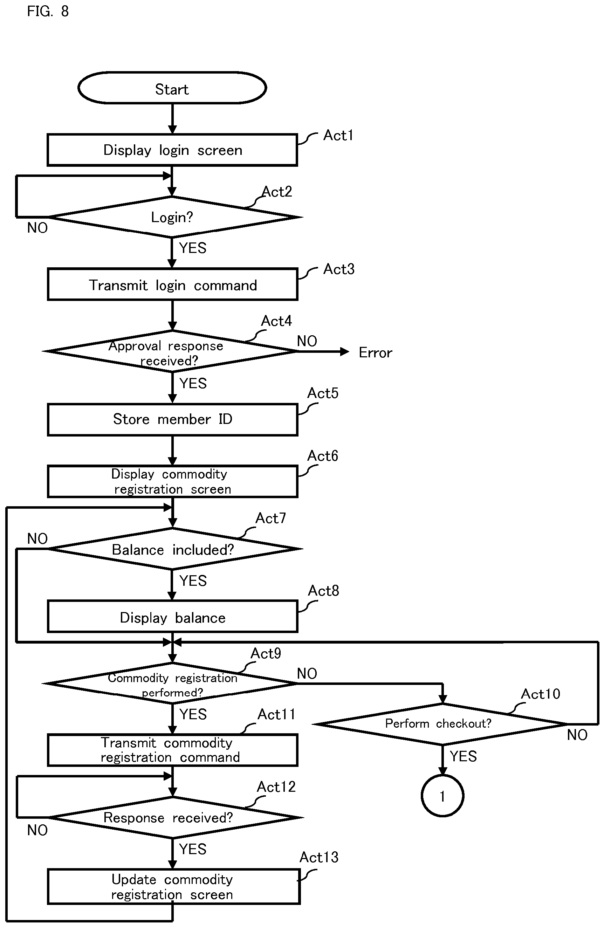

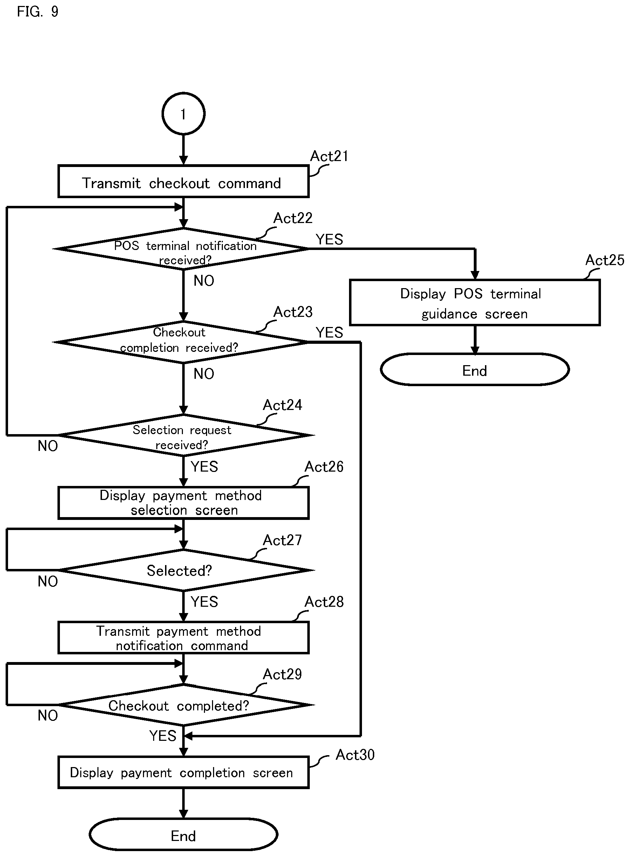

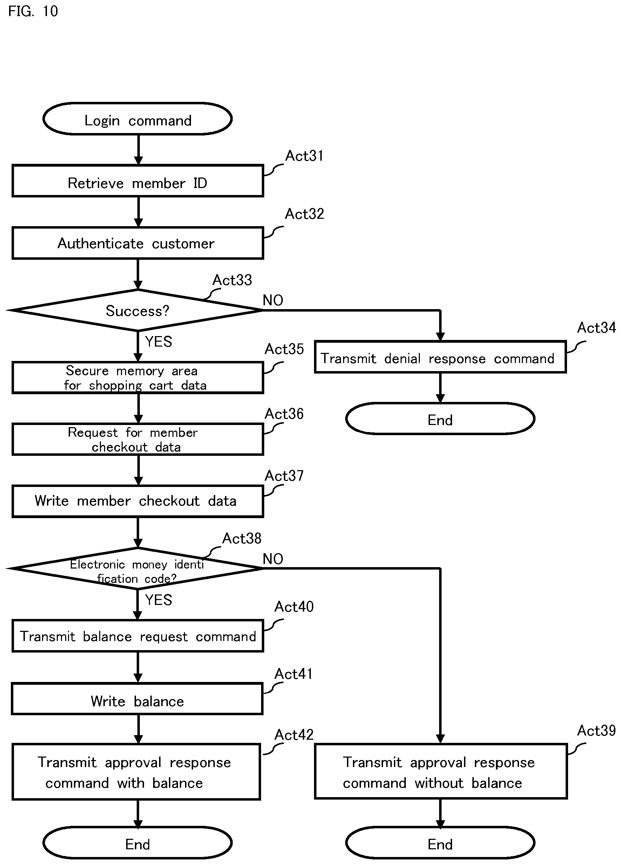

FIGS. 8 and 9 are flowcharts illustrating procedures performed by the processor 71 of the information terminal 70 in accordance with the terminal program. The terminal program is stored in the main memory 72 or the auxiliary storage device 73. FIGS. 10 to 13 are flowcharts showing procedures performed by the virtual POS server 50 in response to receipt of main commands transmitted from the information terminal 70. These procedures are performed in accordance with the control program. The control program is stored in the main memory 52 or the auxiliary storage device 53.

The main operation of the cart POS system 1 in the case where registration of commodities to be purchased by a registered customer and a checkout process for the registered commodities are performed via the information terminal 70 of the cart C will be described below with reference to these flowcharts. The operations described below are an example and the procedures are not particularly limited to the flowcharts.

First, the customer who is shopping using the cart C touches the touch panel 75. When the touch panel 75 is touched, the processor 71 which has been in an idle state is activated. The processor 71 starts the procedure shown in the flow charts of FIG. 8 and FIG. 9.

The processor 71 causes the touch panel 75 to display a login screen in Act 1. The login screen is a screen for instructing the customer to perform a login operation. The customer has a member card in which the member code assigned to the customer is recorded. The customer who confirmed the login screen causes the data of the member card to be read by the reader 77. When the data of the member card is read by the reader 77, the data of the member card is supplied to the processor 71.

The processor 71 that has controlled the touch panel 75 to display the login screen is waiting for the login in Act 2. When the processor 71 receives data from the reader 77 and confirms that the data is the member card data including the member ID, it determines that the login operation has been performed. That is, the processor 71 determines YES in Act 2, and proceeds to Act 3.

The processor 71 controls the wireless unit 74 to transmit a login command to the virtual POS server 50 in Act 3. By this control, the wireless unit 74 wirelessly transmits the login command to the virtual POS server 50. The login command is received at the AP 80 and is sent to the virtual POS server 50 via the network 2. The login command includes the member ID of the member card read by the reader 77.

When a command is received from the information terminal 70 through the communication interface 54, the processor 51 of the virtual POS server 50 confirms the type of the command. When the received command is the login command, the processor 51 starts a command receiving process shown in FIG. 10.

The processor 51 retrieves the member ID from the login command in Act 31. Then, the processor 51 authenticates the member identified by the member ID in Act 32. Specifically, the processor 51 inquires of the member server 20 whether or not the member record including the member ID is present in the member database. As a result, when receiving from the member server 20 a response that the member record is present in the member database, the processor 51 determines that the member authentication succeeds. On the other hand, when receiving from the member server 20 a response that the member record is not present in the member database, the processor 51 determines that the member authentication fails.

The processor 51 which has performed the member authentication confirms the authentication result in Act 33. Here, if the authentication has failed, the processor 51 determines NO in Act 33, and proceeds to Act 34. The processor 51 controls the communication interface 54 to transmit a denial response command to the information terminal 70 in Act 34. By this control, the communication interface 54 transmits the denial response command to the information terminal 70. The denial response command is wirelessly transmitted from the AP 80 via the network 2, and is received by the information terminal 70, which is the login command transmission source.

When the authentication has succeeded, the processor 51 determines YES in Act 33, and proceeds to Act 35. The processor 51 secures a memory area for storing shopping cart data 521 in the main memory 52 in Act 35. Then, the processor 51 writes the member ID included in the login command to the shopping cart data 521.

The processor 51 controls the communication interface 54 to transmit a request command for member checkout data to the member server 20 in Act 36. By this control, the communication interface 54 transmits the request command for the member checkout data. The request command is received by the member server 20 via the network 2. The request command includes the member ID included in the login command.

Upon receipt of the request command, the member server 20 searches the member checkout database 21 for a member record 21R associated with the member ID included in the request command, and transmits the identified member record 21R to the virtual POS server 50. The member record 21R is received by the communication interface 54 of the virtual POS server 50 via the network 2.

The processor 51 of the virtual POS server 50 which has received the member record 21R writes data included in the member record 21R into the shopping cart data 521 associated with the member ID included in the member record 21R in Act 37. In other words, when the member attribute of the member record 21R is "00", the processor 51 writes only the member attribute "00" into the shopping cart data 521. When the member attribute of the member record 21R is "01", the processor 51 writes the member attribute "01" and the credit card number into the shopping cart data 521. When the member attribute of the member record 21R is "10", the processor 51 writes the member attribute "10" and the electronic money identification code into the shopping cart data 521. When the member attribute of the member record 21R is "11", the processor 51 writes the member attribute "11", the credit card number, and the electronic money identification code into the shopping cart data 521.

The processor 51 confirms whether or not the member record 21R contains an electronic money identification code in Act 38. When the electronic money identification code is not included, that is, when the member attribute is "00" or "01", the processor 51 determines that NO is "NO" in Act 38, and proceeds to Act 39. The processor 51 controls the communication interface 54 to transmit an approval response command without a balance to the information terminal 70 in Act 39. By this control, the communication interface 54 transmits the approval response command without balance data. The approval response command without balance is transmitted wirelessly from the AP 80 via the network 2 and is received by the information terminal 70, which is the login command sender. The approval response command without balance data includes the member ID included in the login command.

In Act 38, when the electronic money identification code is included, that is, when the member attribute represents "10" or "11", the processor 51 determines YES, and proceeds to Act 40. The processor 51 controls the communication interface 54 to transmit a balance request command to the electronic money server 30 in Act 40. By this control, the communication interface 54 transmits the balance request command to the electronic money server 30. The balance request command is received by the electronic money server 30 via the network 2. The balance request command includes the electronic money identification code.

Upon receipt of the balance request command, the electronic money server 30 searches the electronic money database 31 for the electronic money record 31R associated with the electronic money identification code included in the balance request command, and transmits the electronic money record 31R to the virtual POS server 2. The electronic money record 31R is transmitted through the network 2. The electronic money record 31R is received by the communication interface 54 of the POS server 50.

The processor 51 of the virtual POS server 50 which has received the electronic money record 31R writes the balance data included in the electronic money record 31R into the shopping cart data 251 in Act 41. As described above, the shopping cart data 251 has been created in Act 35.

The processor 51 controls the communication interface 54 transmit an approval response command with the balance data to the information terminal 70 in Act 42. By this control, the communication interface 54 transmits the approval response command with balance data. The approval response command with the balance data is transmitted from the AP 80 via the network 2 and is received by the information terminal 70, which is the login command transmission source. The balance approval response command includes the balance data together with the member ID included in the login command.

In this manner, the virtual POS server 50 which has received the login command transmits either the denial response command or the approval response command to the information terminal 70 which is the source of the login command. When the processor 51 finishes transmitting any response command, the processor 51 ends the command receiving process.

Returning to the description of FIG. 8, the processor 71 of the information terminal 70 that has transmitted the login command in Act 3 is waiting for a response command from the virtual POS server 50 in Act 4. When a denial response command is received from the virtual POS server 50, the processor 71 determines No in Act 4, and the login is regarded as an error.

When the login is regarded as an error, the customer who is an operator of the information terminal 70 performs an error cancellation operation on the touch panel 75. When the error cancellation operation is performed, the processor 71 resumes the process from Act 1. Therefore, the customer can try the login operation, again.

When receiving an approval response command from the virtual POS server 50, the processor 71 determines YES in Act 4, and proceeds to Act 5. The processor 71 stores in the main memory 72 the member ID included in the approval response command in Act 5. Further, the processor 71 causes the touch panel 75 to display a commodity registration screen in Act 6. The commodity registration screen is a screen for displaying a purchase commodity list including names and prices of the commodities to be purchased by the customer and the total amount of payment.

When the processes of Act 5 and Act 6 are completed, the processor 71 confirms whether or not the balance data is included in the commodity response command in Act 7. When the balance data is included, the processor 71 determines YES in Act 7, and proceeds to Act 8. The processor 71 controls the touch panel 75 to display the balance of the electronic money used by the customer on a part of the commodity registration screen based on the balance data in Act 8. Thereafter, the processor 71 proceeds to Act 9. When the balance data is not included in the commodity response command, the processor 71 determines NO in Act 7, and proceeds to Act 9 without executing Act 8.

The customer who has confirmed the commodity registration screen stores commodities to be purchased in the cart C. For example, the customer puts the commodities into the shopping basket SB placed on the basket receiving part C3. Before the customer puts a commodity into the shopping basket SB, the customer operates the scanner 76 to read the code symbol attached to the commodity. When the code symbol is read by the scanner 76, the commodity code represented by the code symbol is input to the information terminal 70. That is, the commodity identified by the commodity code is registered.

In some cases, a code symbol is not attached to a commodity such as a fresh food. When the code symbol is not attached to the commodity, the customer touches a commodity button corresponding to the commodity from a plurality of commodity buttons displayed on the touch panel 75. When the commodity button is operated, the commodity code of the commodity corresponding to the commodity button is inputted to the information terminal 70. That is, the commodity identified by the commodity code is registered.

The processor 71 confirms whether or not the commodity registration has been performed in Act 9. When the commodity registration has not been performed, the processor 71 determines NO in Act 9, and proceeds to Act 10. The processor 71 confirms whether or not an instruction to perform a checkout process is made in Act 10.

An image of the "checkout" button is displayed on a part of the commodity registration screen. The customer who has finished the shopping touches the checkout button. When the checkout button is touched, the processor 71 recognizes that the instruction to perform the checkout process has been made. When the instruction has not been made, the processor 71 determines NO in Act 10, and returns to Act 9. Here, in Act 9 and Act 10, the processor 71 waits for the commodity registration to be further performed or the instruction for the checkout process to be instructed.

When the processor 71 confirms that the commodity registration has been performed in this standby state, it determines YES in Act 9, and proceeds to Act 11. The processor 71 controls the wireless unit 74 to transmit the commodity registration command to the virtual POS server 50 in Act 11. By this control, the wireless unit 74 wirelessly transmits the commodity registration command. The commodity registration command is received by the AP 80 and sent to the virtual POS server 50 via the network 2. The commodity registration command includes the member ID and the commodity code stored in the main memory 72.

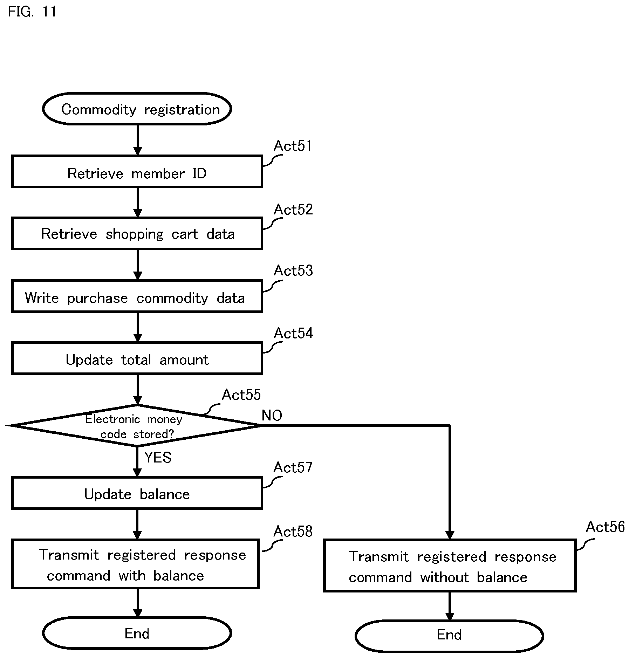

The processor 51 of the virtual POS server 50 which has received the commodity registration command starts the command reception process of the procedure shown in the flowchart in FIG. 11.

The processor 51 retrieves the member ID from the commodity registration command in Act 51. Then, the processor 51 retrieve, as a processing target, the shopping cart data 521 associated with the member ID in Act 52. Thereafter, the shopping cart memory 521 as the processing target is referred to as shopping cart memory 521A.

After the processes of Act 51 and Act 52 are completed, the processor 51 creates purchase commodity data based on the commodity code included in the commodity registration command in Act 53, and writes the purchase commodity data to the shopping cart data 521A. Further, the processor 51 updates the total amount of the shopping cart data 521A by adding the subtotal and tax of the purchase commodity data to the total amount in Act 54.

The processor 51 confirms whether or not the electronic money identification code is stored in the shopping cart data 521A in Act 55. When the electronic money identification code is not stored, the processor 51 determines NO in Act 55, and proceeds to Act 56. The processor 51 controls the communication interface 54 to transmit a registered response command without balance data to the information terminal 70 in Act 56. By this control, the communication interface 54 transmits the registered response command without balance data. The registered response command without balance data is transmitted from the AP 80 via the network 2, and is received by the information terminal 70 of the commodity, which is the registration command transmission source. The registered response command without balance data includes the purchase commodity list and the total amount generated from the purchase commodity data stored in the shopping cart data 521A. The balance data is not included.

In Act 55, when the electronic money identification code is stored in the shopping lingual 521A, the processor 51 determines YES in Act 55, and proceeds to Act 57. The processor 51 updates the balance data of the shopping cart data 521A in Act 57. That is, the processor 51 updates the balance data so that the subtotal and tax of the purchase commodity data are subtracted from the balance. At this time, when the sum of the subtotal and tax is larger than the balance, the balance becomes negative.

When the balance is updated, the processor 51 controls the communication interface 54 to transmit a registered response command with balance data to the information terminal 70 in Act 58. By this control, the communication interface 54 transmits the registered response command with balance data. The registered response command with balance data is wirelessly transmitted from the AP 80 via the network 2, and is received by the information terminal 70, which is the commodity registration command transmission source. The registered response command with balance data includes the updated balance data together with the purchased commodity list and the total amount of payment.

In this way, the virtual POS server 50 that has received the commodity registration command transmits the registered response command with or without balance data in Act 56 or Act 58 to the information terminal 70 that has transmitted the commodity registration command. When the processor 51 finishes transmitting any registered response command, it ends the command reception process.

Returning to the description of FIG. 8, the processor 71 of the information terminal 70, which has transmitted the commodity registration command in Act 11, waits for the registered response command in Act 12. Then, when the registered response command is received from the virtual POS server 50, the processor 71 determines YES in Act 12, and proceeds to Act 13. The processor 71 updates the commodity registration screen displayed on the touch panel 75 in Act 13. That is, the processor 71 updates the purchase commodity list and the total amount of payment displayed on the commodity registration screen with the ones included in the registered response command. Thereafter, the processor 71 returns to Act 7. That is, the processor 71 checks whether or not the balance data is included in the registered response command. When the balance data is included, the processor 71 determines YES in Act 7, and proceeds to Act 8. The processor 71 displays the balance of the electronic money possessed by the customer on a part of the commodity registration screen based on the balance data in Act 8. At this time, when the balance is negative, the negative sign is added to display the balance. When the balance data is not included, the processor 71 determines NO in Act 7, and skips Act 8.

The processor 71 returns to the wait state of Act 9 and Act 10. When the processor 71 confirms that the commodity registration has been performed again in this standby state, the processor 100 executes the processes of Act 11 to Act 13 and Act 7 to Act 9 in the same manner as described above. Therefore, also in the virtual POS server 50, the processor 51 executes the process of receiving the commodity registration command shown in FIG. 11 again.

When it is detected in the standby state of Act 9 and Act 10 that the checkout button is touched, the processor 71 determines YES in Act 10, and proceeds to Act 21 in FIG. 9. The processor 71 controls the wireless unit 74 to transmit a checkout command to the virtual POS server 50 in Act 21. By this control, the wireless unit 74 wirelessly transmits the checkout command. The checkout command is received at the AP 80 and is sent to the virtual POS server 50 via the network 2. The checkout command includes the member ID stored in the main memory 72.

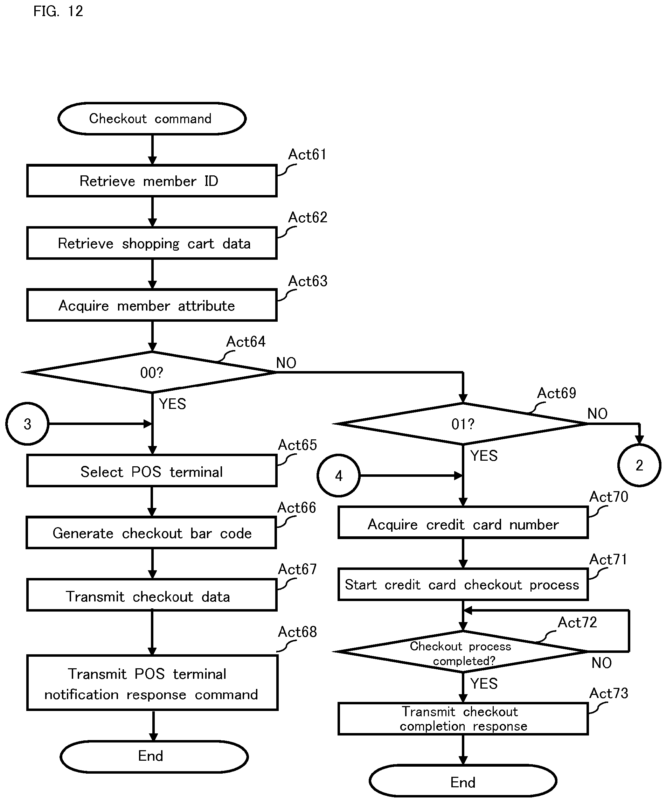

The processor 51 of the virtual POS server 50 which has received the checkout command starts the command reception process of the procedure shown in the flowchart in FIG. 12.

The processor 51 retrieves the member ID from the checkout command in Act 61. The processor 51 retrieves, as an object to be processed, shopping memory data 521 associated with the retrieved member ID in Act 62. That is, the processor 51 retrieves the shopping cart data 521A discussed above.

After the processes of Act 61 and Act 62 are completed, the processor 51 acquires the member attribute from the shopping cart data 521A in Act 63. The processor 51 checks whether or not the member attribute is "00" in Act 64.

When the member attribute is "00", the processor 51 determines YES in Act 64, and proceeds to Act 65. The processor 51 selects one of POS terminals 60 for the customer who has touched the "checkout" button to start the checkout process in Act 65. For example, when one of the two POS terminals 60 is not being used by any customer, the processor 51 selects the POS terminal as a POS terminal that performs the checkout process for the customer. When all two POS terminals 60 are not being used, one of the POS terminals 60 is selected according to a preset order. When both POS terminals 60 are being used, the POS terminal 60 which started the checkout process first is selected.

When the POS terminal 60 for performing the checkout process is selected, the processor 51 generates data of the checkout bar code in Act 66. The checkout bar code is used for identifying a customer who has started the checkout process in the POS terminal 60. The checkout bar code is generated for each customer who starts the checkout process in the POS terminal 60.

The processor 51 controls the communication interface 54 to transmit the checkout data to the store server 10 in Act 67. By this control, the communication interface 54 transmits the checkout data via the network 2. The checkout data is received by the store server 10 and stored in its internal memory. The checkout data includes the purchase commodity data and the total amount of payment stored in the shopping cart data 521A. The checkout data also includes the POS terminal identification code specifying the selected POS terminal 60 and data of the checkout bar code.

The processor 51 controls the communication interface 54 to transmit a POS terminal notification response command to the information terminal 70, which is the checkout command sender, in Act 68. By this control, the communication interface 54 transmits the POS terminal notification response command. The POS terminal notification response command is wirelessly transmitted from the AP 80 via the network 2, and is received by the information terminal 70, which is the checkout command transmission source. The POS terminal notification response command includes the data of the generated checkout bar code.

When the member attribute is not "00" in Act 64, the processor 51 determines NO, and proceeds to Act 69. The processor 51 confirms whether or not the member attribute is "01" in Act 69. When the member attribute is "01", the processor 51 determines YES in Act 69, and proceeds to Act 70.

The processor 51 acquires a credit card number from the shopping cart data 521A in Act 70. Then, the processor 51 executes the credit card checkout process by using the credit card number in Act 71. That is, the processor 51 controls the communication interface 54 to transmit a checkout command by credit card to the communication server 40. By this control, the checkout command is transmitted from the communication interface 54. The checkout command is received by the communication server 40 via the network 2. The checkout command includes the credit card number acquired from the shopping lingual 521A.

The communication server 40 which has received the checkout command communicates with the card company server 4 specified from the credit card number, and executes the credit card checkout process. When the credit card checkout process is finished, the communication server 40 notifies the virtual POS server 50 of the completion of the credit card checkout process.

The processor 51 waits for completion of the credit card checkout process in Act 72. Then, when receiving the credit card checkout completion notification from the communication server 40, the processor 51 determines YES in Act 72, and proceeds to Act 73. The processor 51 controls the communication interface 54 to transmit a checkout completion response command to the information terminal 70, which is the checkout command transmission source, in Act 73. By this control, the communication interface 54 transmits the checkout completion response command. The checkout completion response command is wirelessly transmitted from the AP 80 via the network 2, and is received by the information terminal 70, which is the checkout command transmission source. The checkout completion response command includes data indicating that the credit card checkout process has been completed.

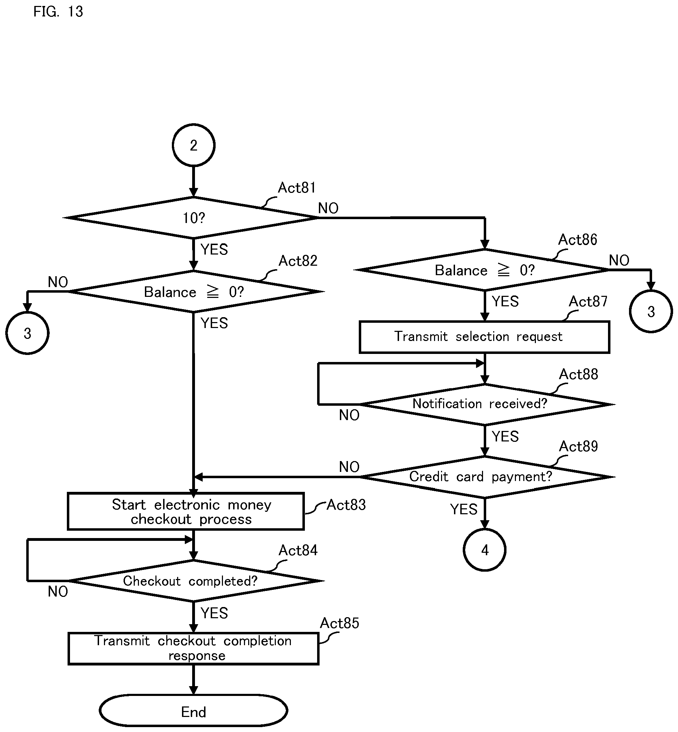

When the member attribute is not "01" in Act 69, the processor 51 determines NO, and proceeds to Act 81 in FIG. 13. The processor 51 checks whether or not the member attribute is "10" in Act 81. When the member attribute is "10", the processor 51 determines YES in Act 81, and proceeds to Act 82.

The processor 51 confirms whether or not the balance indicated by the balance data stored in the shopping cart data 521A is equal to or greater than "0" in Act 82. When the balance is negative, the processor 51 determines NO in Act 82, and proceeds to Act 65 in FIG. 12. Then, the processor 51 executes the processes of Act 65 to Act 68 described above.

When the balance is equal to or greater than "0", the processor 51 determines YES in Act 82, and proceeds to Act 83. The processor 51 executes an electronic money checkout process in Act 83. That is, the processor 51 controls the communication interface 54 to transmit an electronic money checkout command to the electronic money server 30. By this control, the electronic money checkout command is transmitted from the communication interface 54. The electronic money checkout command is received by the electronic money server 30 via the network 2. The electronic money checkout command includes the electronic money identification code and the total amount of payment stored in the shopping cart data 521A .

The electronic money server 30 which has received the electronic money checkout command refers to the electronic money database 31. Then, the electronic money server 30 subtracts the total amount of payment included in the electronic money checkout command from the balance stored in association with the electronic money identification code included in the electronic money checkout command. When the checkout by electronic money is completed in this way, the electronic money server 30 notifies the virtual POS server 50 of completion of the electronic money checkout.

The processor 51 waits for completion of the electronic money checkout in Act 84. When an electronic money checkout completion notification is received from the electronic money server 30, the processor 51 determines YES in Act 84, and proceeds to Act 85. The processor 51 controls the communication interface 54 to transmit a checkout completion response command to the information terminal 70, which is the checkout command transmission source, in Act 85. By this control, the communication interface 54 transmits the checkout completion response command. The checkout completion response command is wirelessly transmitted from the AP 80 via the network 2, and is received by the information terminal 70, which is the checkout command transmission source. The checkout completion response command includes data indicating that the electronic money checkout has been completed.

When the member attribute is not "10" in Act 81, that is, when the member attribute is "11", the processor 51 determines NO in Act 81, and proceeds to Act 86. The processor 51 confirms whether or not the balance indicated by the balance data stored in the shopping cart data 521A is equal to or greater than "0" in Act 86. When the balance is negative, the processor 51 determines NO in Act 86, and proceeds to Act 65 in FIG. 12. The processor 51 executes the processes of Act 65 to Act 68 described above.

When the balance is equal to or greater than "0", the processor 51 determines YES in Act 86, and proceeds to Act 87. The processor 51 controls the communication interface 54 to transmit a selection request command of the checkout method to the information terminal 70, which is the checkout command transmission source, in Act 87. By this control, the communication interface 54 transmits the selection request command for the checkout method. The selection request command is wirelessly transmitted from the AP 80 via the network 2, and is received by the information terminal 70 of the checkout command transmission source.

Returning to the description of FIG. 9.

In Act 21, the processor 71 of the information terminal 70 that has transmitted the checkout command confirms whether or not the POS terminal notification response command is received in Act 22. If the POS terminal notification response command has not been received, the processor 71 determines NO in Act 22, and proceeds to Act 23. The processor 71 confirms whether or not the checkout completion response command is received in Act 23. If the checkout completion response command has not been received, the processor 71 determines NO in Act 23, and proceeds to Act 24. The processor 71 confirms whether or not the selection request command is received in Act 24. When the selection request command is not received, the processor 71 determines NO in Act 24, and returns to Act 22. Here, the processor 71 waits for receiving the POS terminal notification response command, receiving the checkout completion response command, or receiving the selection request command in Act 22 to Act 24.

In this waiting state, when the POS terminal notification response command is received, the processor 71 determines YES in Act 22, and proceeds to Act 25. The processor 71 displays a POS terminal guidance screen on the touch panel 75 in Act 25. The identification code of the POS terminal where the checkout process is performed and the checkout bar code included in the POS terminal notification response command are displayed on the POS terminal guidance screen.

The customer who confirmed the POS terminal guidance screen goes to the area where the POS terminal 60 assigned the POS terminal identification code is installed, and causes the checkout bar code to be read by a scanner of the POS terminal 60. Then, the POS terminal 60 acquires the checkout data stored together with the checkout bar code from the store server 10. As a result, in the POS terminal 60, checkout including payment by cash and point can be made based on the checkout data.

When the selection request command is received in the standby state of Act 22 to Act 24, the processor 71 determines YES in Act 24, and proceeds to Act 26. The processor 71 causes the touch panel 75 to display a payment method selection screen in Act 26. The payment method selection screen is a screen for prompting the customer to select one of credit card payment and electronic money payment.

The customer who has confirmed the payment method selection screen selects one of the credit card payment and the electronic money payment. Then, the customer touches the payment method selection screen so that the determined payment method is selected.

The processor 71 waits for the payment method to be selected in Act 27. Then, when the payment method is selected, the processor 71 determines YES in Act 27, and proceeds to Act 28. The processor 71 controls the wireless unit 74 to transmit a payment method notification command to the virtual POS server 50 in Act 28. By this control, the wireless unit 74 wirelessly transmits the payment method notification command. The wireless transmitted payment method notification command is received at the AP 80 and is sent to the virtual POS server 50 via the network 2. The payment method notification command includes data for identifying the selected payment method.

Returning to the description of FIG. 13, in Act 87, the processor 51 of the virtual POS server 50, which has transmitted the selection request command, waits for the payment method notification command in Act 88. When the payment method notification command is received, the processor 51 determines YES in Act 88, and proceeds to Act 89. The processor 51 determines whether the payment method notification command is a command for notifying credit card payment or a command for notifying electronic money payment in Act 89. When the command indicates the credit card payment, the processor 51 determines YES in Act 89, and proceeds to Act 70 in FIG. 12. Thereafter, the processor 51 executes the processes of Act 70 to Act 73 in the same manner as described above.

When the command indicates the electronic money payment, the processor 51 determines NO in Act 89, and proceeds to Act 83 in FIG. 13. Thereafter, the processor 51 executes the processes of Act 83 to Act 85 in the same manner as described above.

In this manner, when the processor 51 of the virtual POS server 50 which received the checkout command completes the Act 68 at Act 73, or when the checkout completion response command is transmitted at Act 85 or Act, the virtual POS server 20 ends the command reception process.

Returning to the description of FIG. 9, the processor 71 of the information terminal 70, which has transmitted the payment method notification command, waits for the checkout completion response command in Act 29. Then, when the checkout completion response command is received, the processor 71 determines YES in Act 29, and proceeds to Act 30. It should be noted that, when the checkout completion response command is received in the standby state of Act 22 to Act 24, the processor 71 determines YES in Act 23, and proceeds to Act 30.

The processor 71 causes the touch panel 75 to display a checkout completion screen in Act 30. The checkout completion screen is a screen for notifying a customer that checkout is completed by credit card payment or electronic money payment.

When the POS terminal guidance screen is displayed in Act 25 or the checkout completion screen is displayed in Act 30, the processor 71 ends the procedure shown in the flowcharts in FIG. 8 and FIG. 9.

In this manner, the processor 51 of the virtual POS server 50 calculates the total amount of payment of the commodities purchased by the customer based on the data of the commodities registered by the information terminal 70 in Act 51 to Act 54 in FIG. 11.

In addition, in Act 61 to Act 63 in FIG. 12, the processor 51 acquires the member attribute representing payment information set for the customer in advance.

When the member attribute is "11", that is, when the data indicating two or more payment methods are available is acquired, the processor 51 requests the information terminal 70 to select one of the payment methods to be used for checkout in Act 86 and Act 87.

In Act 70 and Act 71 of FIG. 12, when the data required for payment indicates a credit card number, the processor 51 executes the credit card checkout process. Similarly, in Act 82 and Act 83 in FIG. 13, when the data required for payment indicates an electronic money identification code, the processor 51 executes the electronic money checkout process on condition that the balance of the electronic money is equal to or larger than the price.

In addition, in Act 40 to Act 42 in FIG. 10 and Act 57 and Act 58 in Fig. 11, the processor 51 notifies the information terminal 70 of the balance when data required for payment includes the balance of electronic money.

When the processor 51 detects that the credit card checkout process or the electronic money checkout process is completed in Act 85 in FIG. 12 and Act 73 in FIG. 13, the processor 20 notifies the information terminal 70 that the checkout has been completed.

As described above, when the member having the member attribute "01" touches the checkout button after the commodities to be purchased have been registered by using the information terminal 70, the payment is made by the credit card, whose credit card number has been registered in advance by the member. Similarly, when a member having a member attribute of "10" touches the "checkout" button after the commodities to be purchased have been registered by using the information terminal 70, the payment is made with the electronic money identified by the electronic money identification code registered in advance.

On the other hand, when the member with the member attribute "11" touches the checkout button after the commodities to be purchased have been registered by using the information terminal 70, the payment method selection screen is displayed on the touch panel 75 of the information terminal 70. When the member selects the credit card payment, the payment is made by the credit card whose credit card number has been registered in advance. When the member selects the electronic money payment, the payment is made by electronic money identified by the electronic money identification code registered in advance by the member.

Thus, by using the information terminal 70 provided in the cart C, the member can register commodities and start the checkout process. Since the checkout device is not installed in the cart C, the operability of the cart C is not impaired. Further, the cart POS system 1 can be introduced at a lower cost as compared with the case where the checkout device is attached to the cart C.

Further, by registering the credit card number and the electronic money identification code in advance, the member can select whether to perform credit card checkout or electronic money checkout. Thus, the member can select the payment methods depending on his or her purposes, e.g., using an electronic money checkout for inexpensive purchase, and using a credit card checkout for expensive purchase.

Further, the balance of the electronic money is displayed on the touch panel 75 of the information terminal 70 for the member who has registered the electronic money identification code in advance. The balance is reduced and displayed again every time a commodity is registered by the information terminal 70. Therefore, the member using the electronic money payment can know in real time whether or not the balance of the electronic money remains during shopping.

Furthermore, when the balance of the electronic money becomes negative, the electronic money checkout is prohibited in the cart POS system 1. Therefore, it is possible to prevent the balance of electronic money from becoming negative due to the electronic money checkout. In this case, if the electronic money checkout is prohibited because the balance of electronic money becomes negative, and the member has registered the credit card number, the credit card checkout is executed. When the credit card number is not registered, checkout is carried out by the POS terminal 60 separately installed in the store. Therefore, even if the electronic money checkout is prohibited, the member can perform the checkout by another payment method.

When the credit card checkout or the electronic money checkout is completed, a checkout completion screen is displayed on the information terminal 70. Therefore, the member can visually confirm that the credit card checkout or the electronic money checkout has been completed.

Although an embodiment of the information processing apparatus is described in a manner requiring the customer to register commodities and start the checkout process by himself or herself without using the checkout apparatus, this embodiment is not limited to the embodiment.

In the above embodiment, the virtual POS server 50 has been described as one embodiment of the information processing apparatus. The virtual POS server 50 is not limited to the one described in the above embodiment. For example, the virtual POS server 50 may be an information processing apparatus that has a function of at least one of the store server 10, the member server 20 and the communication server 40. In other words, the store server 10, the member server 20 or the communication server 40 may have the function of the virtual POS server 50.

In the embodiment described above, the information terminal 70 is attached to the cart C. The information terminal 70 is not necessarily attached to the cart C. For example, a smartphone, a tablet terminal, or the like owned by the customer may be used as the information terminal 70.

In the above embodiment, two payment processes are explained for the customer to complete checkout without using POS terminal, e.g., credit card and electronic money payments. However, only one payment process may be used for such checkout. For example, only one of credit card payment and electronic money payment may be available.

In the embodiment described above, it is assumed that the control program is stored in advance in the main memory 52 or the auxiliary storage device 53 of the virtual POS server 50. In this regard, a control program, which is separately assigned to the virtual POS server 50, may be written to a writable storage device included in the virtual POS server 50 in accordance with an operation performed by a user or the like. The transfer of the control program or the like can be carried out by recording on a removable recording medium or by communication via a network. The recording medium may store a program such as a CD-ROM, a memory card or the like, and may have any configuration as long as it can be read by the apparatus.

## Claims

1. A checkout system comprising:
an information processing apparatus (50) that comprises
a first processor (51),
a first memory (52)
and a first network interface (54),
a mobile terminal (TM), provided on a shopping cart, that comprises
a second memory (72);
an input device configured to receive a first input of first data of a commodity to be purchased by a customer and a second input being a checkout command for executing a checkout process, the input device consisting of a touch panel (75) configured to receive the first input of first data of commodities to which a code symbol is not attached as well as the second input and a scanner configured to receive the first input of first data of commodities to which a code symbol is attached, the touch panel further being configured as a display device;
a second network interface (74), and
a second processor (71) configured for:
causing (ACT 1) the touch panel (75) to display a login screen;
waiting (ACT 2) for a login operation;
upon reception of the login operation, controlling (ACT 3) the second network interface to transmit a login command to the information processing apparatus (50), the login command including a member ID;
waiting (ACT 4) for a response command from the information processing apparatus (50);
when the response command is an approval response command, storing (ACT 5) in the second memory (72) the member ID included in the login command, displaying (ACT 6) a commodity registration screen on the touch panel (75) configured for performing commodity registration by the user,
confirming (ACT 7) whether or not balance data is included in the approval response command , and upon determining that the balance data is included in the approval response command, displaying (ACT 8) the balance on a part of the commodity registration screen;
upon determining (ACT 9) that the commodity registration has been performed by the customer, controlling the second network interface to transmit a commodity registration command to the information processing apparatus (50), the commodity registration command including the member ID and commodity code of registered commodities, the commodity registration command being thereby the first input,
receiving a registered response command from the information processing apparatus (50), upon receiving the registered response command, updating the commodity registration screen displayed on the touch panel (75),
wherein updating the commodity registration screen displayed on the touch panel comprises: checking whether or not updated balance data is included in the registered response command, and, when updated balance data is included in the registered response command, controlling the display device to display an updated balance of the electronic money possessed by the customer on said part of the commodity registration screen;
when determining (ACT 10) that the commodity registration command has not been performed, upon determining the second input has been performed, controlling the second network interface to transmit (ACT 11) a first notification including the member ID to the information processing apparatus,
wherein the first processor (51) is configured for:
upon reception of the login command from the mobile terminal through the first network interface, retrieving (ACT 31) the member ID from the login command;
performing (ACT 32) an authentication of a member identified by the member ID, the first processor being further configured for:
upon success of the authentication (ACT 33), securing (ACT 35) a memory area for shopping cart data in the first memory;
writing the member ID included in the login command to the shopping cart data;
requesting (ACT 36) member checkout data from an external server (20) via the first network interface (54);
upon reception through the first network interface of a member record containing the member checkout data from the external server, writing (ACT 37) the member checkout data into corresponding shopping cart data associated with the member ID included in the member record in the first memory, the member checkout data including zero or more payment methods used by the customer and set for the customer in advance, the zero or more payment methods being zero or more of a credit card number and an electronic money identification code;
determining (ACT 38) whether the member checkout data includes an electronic money identification code;
upon determining that the member checkout data includes an electronic money identification code, transmitting (ACT 40) a balance request command including the electronic money identification code to an electronic money server through the first network interface;
upon reception through the first network interface of an electronic money record containing balance data from the electronic money server, writing (ACT 41) the balance data into the shopping cart data;
transmitting (ACT 42) the approval response command with the balance data to the mobile terminal via the first network interface (54);
upon determining that the member checkout data does not contain an electronic money identification code, transmitting the approval response command to the mobile terminal without the balance data via the first network interface (54);
upon receipt of the first notification from the mobile terminal,
retrieving from the first memory the shopping cart data associated with the member ID included in the first notification and performing a checkout process based on the shopping cart data,
the first processor further performing calculating (ACT 51) a total amount of payment of commodities purchased by the customer based on the commodity registration command by, upon reception of the commodity registration command from the mobile terminal:
retrieving (ACT 52) the member ID from the commodity registration command, retrieving shopping cart data associated with the member ID;
creating (ACT 53) purchase commodity data based on the commodity code included in the commodity registration command and writing the purchase commodity data to the retrieved shopping cart data;
updating (ACT 54) an amount to be paid by adding a subtotal and tax of the purchase commodity data to the total amount of commodities written on the retrieved shopping cart data,
determining (ACT 55) if the electronic money identification code is stored in the shopping cart data in the first memory,
upon determining that the electronic money identification code is not stored in the shopping cart data, transmitting (ACT 56) the registered response command without balance data to the mobile terminal via the first network interface (54),
upon determining that the electronic money identification code is stored in the shopping cart data, updating (ACT 57) the balance data of the shopping cart data, by updating the balance data so that the subtotal and tax of the purchase commodity data are subtracted from the balance; and
transmitting (ACT 58) the registered response command with the updated balance data to the mobile terminal via the first network interface (54).

2. The checkout system according to claim 1, wherein, upon receiving (ACT 24) the first notification, determining that the member checkout data includes two payment methods and determining (ACT 86) that the balance indicated by the balance data stored in the shopping cart data is greater than or equal to zero, the first processor is further configured to control the first network interface to transmit (ACT 87) to the mobile terminal a request to select one of the payment methods, and, upon receiving the request to select one of the payment methods, the second processor is configured to display (ACT 26) a payment selection screen for prompting the customer to select one of the payment methods, the touch panel is configured to receive a third input of selecting (ACT 27) one of the payment methods, upon receipt of the third input, the second processor transmits (ACT 28) third data indicating the selected payment method to the information processing apparatus via the second network interface (74), and the checkout process is performed by the selected payment method indicated by the third data.

3. The checkout system according to claims 1 or 2, wherein the first processor is configured to perform the checkout process by the electronic money only when the balance is greater than the total amount of payment of commodities purchased by the customer.

4. The checkout system according to any one of claims 1 to 3, wherein upon completion of the checkout process, the first processor is configured to control the first network interface to transmit a second notification to the mobile terminal.

5. The checkout system according to claim 4, wherein upon receipt of the second notification, the second processor is configured to control the display device to display a screen indicating that the checkout process has been completed.

6. A method performed by the checkout system (1) according to claim 1, the method comprising:
by the second processor of the mobile terminal:
causing (ACT 1) the touch panel to display a login screen;
waiting (ACT 2) for a login operation;
upon reception of the login operation, controlling (ACT 3) the second network interface to transmit a login command to the information processing apparatus (50), the login command including a member ID;
waiting (ACT 4) for a response command from the information processing apparatus (50);
when the response command is an approval response command, storing (ACT 5) in the second memory the member ID included in the login command,
displaying (ACT 6), on the touch panel, a commodity registration screen for performing commodity registration by the user, confirming (ACT 7) whether or not balance data is included in the approval response command, and upon determining that the balance data is included in the approval response command, displaying (ACT 8) the balance on a part of the commodity registration screen;
upon determining (ACT 9) that the commodity registration has been performed by the customer, controlling the second network interface to transmit a commodity registration command to the information processing apparatus (50), the commodity registration command including the member ID and commodity code of registered commodities,
receiving a registered response command from the information processing apparatus (50), upon receiving the registered response command, updating the commodity registration screen displayed on the touch panel (75), wherein updating the commodity registration screen displayed on the touch panel comprises: checking whether or not updated balance data is included in the registered response command, and, when updated balance data is included in the registered response command, controlling the display device to display an updated balance of the electronic money possessed by the customer on said part of the commodity registration screen;
when determining (ACT 10) that the commodity registration command has not been performed, upon determining the second input has been performed, controlling the second network interface to transmit (ACT 11) a first notification including the member ID to the information processing apparatus,
by the first processor of the information processing apparatus:
upon reception of the login command from the mobile terminal through the first network interface, retrieving (ACT 31) the member ID from the login command;
performing (ACT 32) an authentication of a member identified by the member ID;
upon success of the authentication (ACT 33), securing (ACT 35) a memory area for shopping cart data in the first memory;
writing the member ID included in the login command to the shopping cart data;
requesting (ACT 36) member checkout data from an external server (20) via the first network interface;
upon reception of a member record containing the member checkout data from the external server, writing (ACT 37) the member checkout data into corresponding shopping cart data associated with the member ID included in the member record in the first memory, the member checkout data including zero or more payment methods used by the customer and set for the customer in advance, the zero or more payment methods being zero or more of a credit card number and an electronic money identification code;
determining (ACT 38) whether the member checkout data includes an electronic money identification code;
upon determining that the member checkout data includes an electronic money identification code, transmitting (ACT 40) a balance request command including the electronic money identification code to an electronic money server through the first network interface;
upon reception through the first network interface of an electronic money record containing balance data from the electronic money server, writing (ACT 41) the balance data into the shopping cart data;
transmitting (ACT 42) the approval response command with the balance data to the mobile terminal via the first network interface;
upon determining that the member checkout data does not contain an electronic money identification code, transmitting the approval response command to the mobile terminal without the balance data via the first network interface (54);
upon receipt of the first notification from the mobile terminal,
retrieving from the first memory the shopping cart data associated with the member ID included in the first notification and performing a checkout process based on the shopping cart data,
the first processor further performing calculating a total amount of payment of commodities purchased by the customer based on the commodity registration command by, upon reception of the commodity registration command from the mobile terminal:
retrieving (ACT 52) the member ID from the commodity registration 10 command, retrieving shopping cart data associated with the member ID;
creating (ACT 53) purchase commodity data based on the commodity code included in the commodity registration command and writing the purchase commodity data to the retrieved shopping cart data;
updating (ACT 54) an amount to be paid by adding a subtotal and tax of the purchase commodity data to the total amount of commodities written on the retrieved shopping data, determining if the electronic money identification code is stored in the shopping cart data in the first memory,
upon determining (ACT 55) that the electronic money identification code is not stored in the shopping cart data, transmitting (ACT 56) the registered response command without balance data to the mobile terminal via the first network interface (54),
upon determining that the electronic money identification code is stored in the shopping cart data, updating (ACT 57) the balance data of the shopping cart data, by updating the balance data so that the subtotal and tax of the purchase commodity data are subtracted from the balance; and
transmitting (ACT 58) the registered response command with the updated balance data to the mobile terminal via the first network interface (54).

7. The method according to claim 6, further comprising: upon receiving the first notification, determining that the member checkout data includes two payment methods and determining that the balance indicated by the balance data stored in the shopping cart data is greater than or equal to zero, the first processor controlling the first network interface to transmit to the mobile terminal a request to select one of the payment methods, and, upon receiving the request to select one of the payment methods, the second processor displaying a payment selection screen for prompting the customer to select one of the payment methods, receiving, by the touch panel, a third input of selecting one of the payment methods, the second processor transmitting third data indicating the selected payment method to the information processing apparatus via the second network interface (74), wherein the checkout process is performed further based on the selected payment method.

## Patentansprüche

1. Kassensystem, umfassend:
ein Informationsverarbeitungsgerät (50), das Folgendes umfasst einen ersten Prozessor (51),
einen ersten Speicher (52)
und eine erste Netzschnittstelle (54),
ein mobiles Terminal (TM), das an einem Einkaufswagen bereitgestellt ist, das Folgendes umfasst
einen zweiten Speicher (72);
eine Eingabevorrichtung, die konfiguriert ist, um eine erste Eingabe von ersten Daten einer Ware, die von einem Kunden gekauft werden soll, und eine zweite Eingabe, die ein Kassenbefehl zum Ausführen eines Abrechnungsprozesses ist, zu empfangen, wobei die Eingabevorrichtung aus einem Berührungsfeld (75), das konfiguriert ist, um die erste Eingabe von ersten Daten von Waren, an denen kein Codesymbol angebracht ist, sowie die zweite Eingabe zu empfangen, und einem Scanner, der konfiguriert ist, um die erste Eingabe von ersten Daten von Waren, an denen ein Codesymbol angebracht ist, zu empfangen, besteht, wobei das Berührungsfeld ferner als Anzeigevorrichtung konfiguriert ist;
eine zweite Netzschnittstelle (74) und
einen zweiten Prozessor (71), der zu Folgendem konfiguriert ist:
Veranlassen (ACT 1) des Berührungsfelds (75), einen Anmeldebildschirm anzuzeigen;
Warten (ACT 2) auf einen Anmeldevorgang;
nach Empfang des Anmeldevorgangs, Steuern (ACT 3) der zweiten Netzschnittstelle, um einen Anmeldebefehl an das Informationsverarbeitungsgerät (50) zu übertragen, wobei der Anmeldebefehl eine Mitglieds-ID beinhaltet;
Warten (ACT 4) auf einen Antwortbefehl von dem Informationsverarbeitungsgerät (50);
wenn der Antwortbefehl ein Genehmigungsantwortbefehl ist, Speichern (ACT 5), in dem zweiten Speicher (72), der Mitglieds-ID, die in dem Anmeldebefehl beinhaltet ist, Anzeigen (ACT 6) eines Warenregistrierungsbildschirms auf dem Berührungsfeld (75), das zum Durchführen einer Warenregistrierung durch den Benutzer konfiguriert ist, Bestätigen (ACT 7), ob Saldodaten in dem Genehmigungsantwortbefehl beinhaltet sind, und nach Bestimmen, dass die Saldodaten in dem Genehmigungsantwortbefehl beinhaltet sind, Anzeigen (ACT 8) des Saldos auf einem Teil des Warenregistrierungsbildschirms;
nach Bestimmen (ACT 9), dass die Warenregistrierung durch den Kunden durchgeführt wurde, Steuern der zweiten Netzschnittstelle, um einen Warenregistrierungsbefehl an das Informationsverarbeitungsgerät (50) zu übertragen, wobei der Warenregistrierungsbefehl die Mitglieds-ID und den Warencode von registrierten Waren beinhaltet und der Warenregistrierungsbefehl dadurch die erste Eingabe ist,
Empfangen eines registrierten Antwortbefehls von dem Informationsverarbeitungsgerät (50), nach Empfangen des registrierten Antwortbefehls Aktualisieren des Warenregistrierungsbildschirms, der auf dem Berührungsfeld (75) angezeigt wird, wobei ein Aktualisieren des Warenregistrierungsbildschirms, der auf dem Berührungsfeld angezeigt wird, Folgendes umfasst: Prüfen, ob aktualisierte Saldodaten in dem registrierten Antwortbefehl beinhaltet sind, und, wenn aktualisierte Saldodaten in dem registrierten Antwortbefehl beinhaltet sind, Steuern der Anzeigevorrichtung, um einen aktualisierten Saldo des elektronischen Gelds, das der Kunde besitzt, auf dem Teil des Warenregistrierungsbildschirms anzuzeigen;
wenn bestimmt wird (ACT 10), dass der Warenregistrierungsbefehl nicht durchgeführt wurde, nach Bestimmen, dass die zweite Eingabe durchgeführt wurde, Steuern der zweiten Netzschnittstelle, um eine erste Benachrichtigung, die die Mitglieds-ID beinhaltet, an die Informationsverarbeitungsgerät zu übertragen (ACT 11),
wobei der erste Prozessor (51) zu Folgendem konfiguriert ist:
nach Empfang des Anmeldebefehls von dem mobilen Terminal über die erste Netzschnittstelle, Abrufen (ACT 31) der Mitglieds-ID aus dem Anmeldebefehl;
Durchführen (ACT 32) einer Authentifizierung eines Mitglieds, das durch die Mitglieds-ID identifiziert ist, wobei der erste Prozessor ferner zu Folgendem konfiguriert ist:
nach erfolgreicher Authentifizierung (ACT 33), Sichern (ACT 35) eines Speicherbereichs für Einkaufswagendaten in dem ersten Speicher;
Schreiben der Mitglieds-ID, die in dem Anmeldebefehl beinhaltet ist, in die Einkaufswagendaten;
Anfordern (ACT 36) von Mitgliedskassendaten von einem externen Server (20) über die erste Netzschnittstelle (54);
nach Empfang, durch die erste Netzschnittstelle, eines Mitgliedsdatensatzes, der die Mitgliedskassendaten enthält, von dem externen Server, Schreiben (ACT 37) der Mitgliedskassendaten in entsprechende Einkaufswagendaten, die mit der Mitglieds-ID assoziiert sind, die in dem Mitgliedsdatensatz in dem ersten Speicher beinhaltet ist, wobei die Mitgliedskassendaten null oder mehrere Zahlungsverfahren beinhalten, die von dem Kunden verwendet werden und für den Kunden im Voraus eingestellt sind, wobei die null oder mehreren Zahlungsverfahren null oder mehrere von einer Kreditkartennummer und einem Identifizierungscode für elektronisches Geld sind;
Bestimmen (ACT 38), ob die Mitgliedskassendaten einen Identifizierungscode für elektronisches Geld beinhalten;
nach Bestimmen, dass die Mitgliedskassendaten einen Identifizierungscode für elektronisches Geld beinhalten, Übertragen (ACT 40) eines Saldoanforderungsbefehls, der den Identifizierungscode für elektronisches Geld beinhaltet, an einen Server für elektronisches Geld über die erste Netzschnittstelle;
nach Empfang, über die erste Netzschnittstelle, eines Datensatzes für elektronisches Geld, der Saldodaten von dem Server für elektronisches Geld beinhaltet, Schreiben (ACT 41) der Saldodaten in die Einkaufswagendaten;
Übertragen (ACT 42) des Genehmigungsantwortbefehls mit den Saldodaten an das mobile Terminal über die erste Netzschnittstelle (54);
nach Bestimmen, dass die Mitgliedskassendaten keinen Identifizierungscode für elektronisches Geld enthalten, Übertragen des Genehmigungsantwortbefehls an das mobile Terminal ohne die Saldodaten über die erste Netzschnittstelle (54);
nach Empfang der ersten Benachrichtigung von dem mobilen Terminal, Abrufen, aus dem ersten Speicher, der Einkaufswagendaten, die mit der Mitglieds-ID assoziiert sind, die in der ersten Benachrichtigung beinhaltet ist, und Durchführen eines Abrechnungsprozesses basierend auf den Einkaufswagendaten,
wobei der erste Prozessor ferner ein Berechnen (ACT 51) eines gesamten Zahlungsbetrags der von dem Kunden gekauften Waren basierend auf dem Warenregistrierungsbefehl nach Erhalt des Warenregistrierungsbefehls von dem mobilen Terminal durch Folgendes durchführt:
Abrufen (ACT 52) der Mitglieds-ID aus dem Warenregistrierungsbefehl, Abrufen von Einkaufswagendaten, die mit der Mitglieds-ID assoziiert sind;
Erstellen (ACT 53) von Kaufwarendaten basierend auf dem Warencode, der in dem Warenregistrierungsbefehl beinhaltet ist, und Schreiben der Kaufwarendaten in die abgerufenen Einkaufswagendaten;
Aktualisieren (ACT 54) eines zu zahlenden Betrags durch Addieren einer Zwischensumme und Steuer der Kaufwarendaten zu dem Gesamtbetrag von Waren, der in den abgerufenen Einkaufswagendaten geschrieben sind,
Bestimmen (ACT 55), ob der Identifizierungscode für elektronisches Geld in den Einkaufswagendaten in dem ersten Speicher gespeichert ist,
nach Bestimmen, dass der Identifizierungscode für elektronisches Geld nicht in den Einkaufswagendaten gespeichert ist, Übertragen (ACT 56) des registrierten Antwortbefehls ohne Saldodaten an das mobile Terminal über die erste Netzschnittstelle (54),
nach Bestimmen, dass der Identifizierungscode für elektronisches Geld in den Einkaufswagendaten gespeichert ist, Aktualisieren (ACT 57) der Saldodaten der Einkaufswagendaten, indem die Saldodaten aktualisiert werden, sodass die Zwischensumme und Steuer der Kaufwarendaten von dem Saldo abgezogen werden; und Übertragen (ACT 58) des registrierten Antwortbefehls mit den aktualisierten Saldodaten an das mobile Terminal über die erste Netzschnittstelle (54).

2. Kassensystem nach Anspruch 1, wobei nach Empfangen (ACT 24) der ersten Benachrichtigung, eines Bestimmens, dass die Mitgliedskassendaten zwei Zahlungsverfahren beinhalten, und eines Bestimmens (ACT 86), dass der Saldo, der durch die in den Einkaufswagendaten gespeicherten Saldodaten angegeben wird, größer als oder gleich wie Null ist, der erste Prozessor ferner konfiguriert ist, um die erste Netzschnittstelle zu steuern, um eine Anforderung an das mobile Terminal zu übertragen (ACT 87), eines der Zahlungsverfahren auszuwählen, und der zweite Prozessor konfiguriert ist, um nach Empfangen der Anforderung, eines der Zahlungsverfahren auszuwählen, einen Zahlungsauswahlbildschirm anzuzeigen (ACT 26), um den Kunden aufzufordern, eines der Zahlungsverfahren auszuwählen, wobei das Berührungsfeld konfiguriert ist, um eine dritte Eingabe eines Auswählens (ACT 27) einer der Zahlungsverfahren zu empfangen, nach Empfang der dritten Eingabe der zweite Prozessor dritte Daten, die das ausgewählte Zahlungsverfahren angeben, über die zweite Netzschnittstelle (74) an das Informationsverarbeitungsgerät überträgt (ACT 28),
und der Abrechnungsprozess mit dem ausgewählten Zahlungsverfahren durchgeführt wird, das durch die dritten Daten angegeben wird.

3. Kassensystem nach Anspruch 1 oder 2, wobei der erste Prozessor konfiguriert ist, um den Abrechnungsprozess durch das elektronische Geld nur dann durchzuführen, wenn der Saldo größer ist als der gesamte Zahlungsbetrag der Waren, die von dem Kunden gekauft werden.

4. Kassensystem nach einem der Ansprüche 1 bis 3, wobei der erste Prozessor konfiguriert ist, um nach Abschluss des Abrechnungsprozesses die erste Netzschnittstelle zu steuern, um eine zweite Benachrichtigung an das mobile Terminal zu übertragen.

5. Kassensystem nach Anspruch 4, wobei der zweite Prozessor nach Erhalt der zweiten Benachrichtigung konfiguriert ist, um die Anzeigevorrichtung zu steuern, um einen Bildschirm anzuzeigen, der angibt, dass der Abrechnungsprozess abgeschlossen wurde.

6. Verfahren, durchgeführt von dem Kassensystem (1) nach Anspruch 1, das Verfahren umfassend: durch den zweiten Prozessor des mobilen Terminals:
Veranlassen (ACT 1) des Berührungsfelds, einen Anmeldebildschirm anzuzeigen; Warten (ACT 2) auf einen Anmeldevorgang;
nach Empfang des Anmeldevorgangs, Steuern (ACT 3) der zweiten Netzschnittstelle, um einen Anmeldebefehl an das Informationsverarbeitungsgerät (50) zu übertragen, wobei der Anmeldebefehl eine Mitglieds-ID beinhaltet;
Warten (ACT 4) auf einen Antwortbefehl von dem Informationsverarbeitungsgerät (50);
wenn der Antwortbefehl ein Genehmigungsantwortbefehl ist, Speichern (ACT 5), im zweiten Speicher, der in dem Anmeldebefehl beinhalteten Mitglieds-ID,
Anzeigen (ACT 6), auf dem Berührungsfeld, eines Warenregistrierungsbildschirms zum Durchführen einer Warenregistrierung durch den Benutzer, Bestätigen (ACT 7), ob Saldodaten in dem Genehmigungsantwortbefehl beinhaltet sind, und nach Bestimmen, dass die Saldodaten in dem Genehmigungsantwortbefehl beinhaltet sind, Anzeigen (ACT 8) des Saldos auf einem Teil des Warenregistrierungsbildschirms;
nach Bestimmen (ACT 9), dass die Warenregistrierung durch den Kunden durchgeführt wurde, Steuern der zweiten Netzschnittstelle, um einen Warenregistrierungsbefehl an das Informationsverarbeitungsgerät (50) zu übertragen, wobei der Warenregistrierungsbefehl die Mitglieds-ID und den Warencode von registrierten Waren beinhaltet,
Empfangen eines registrierten Antwortbefehls von dem Informationsverarbeitungsgerät (50), nach Empfangen des registrierten Antwortbefehls Aktualisieren des Warenregistrierungsbildschirms, der auf dem Berührungsfeld (75) angezeigt wird, wobei ein Aktualisieren des Warenregistrierungsbildschirms, der auf dem Berührungsfeld angezeigt wird, Folgendes umfasst: Prüfen, ob aktualisierte Saldodaten in dem registrierten Antwortbefehl beinhaltet sind, und, wenn aktualisierte Saldodaten in dem registrierten Antwortbefehl beinhaltet sind, Steuern der Anzeigevorrichtung, um einen aktualisierten Saldo des elektronischen Gelds, das der Kunde besitzt, auf dem Teil des Warenregistrierungsbildschirms anzuzeigen;
wenn bestimmt wird (ACT 10), dass der Warenregistrierungsbefehl nicht durchgeführt wurde, nach Bestimmen, dass die zweite Eingabe durchgeführt wurde, Steuern der zweiten Netzschnittstelle, um eine erste Benachrichtigung, die die Mitglieds-ID beinhaltet, an die Informationsverarbeitungsgerät zu übertragen (ACT 11),
durch den ersten Prozessor des Informationsverarbeitungsgeräts:
nach Empfang des Anmeldebefehls von dem mobilen Terminal über die erste Netzschnittstelle, Abrufen (ACT 31) der Mitglieds-ID aus dem Anmeldebefehl;
Durchführen (ACT 32) einer Authentifizierung eines Mitglieds, das durch die Mitglieds-ID identifiziert ist; nach erfolgreicher Authentifizierung (ACT 33), Sichern (ACT 35) eines Speicherbereichs für Einkaufswagendaten in dem ersten Speicher;
Schreiben der Mitglieds-ID, die in dem Anmeldebefehl beinhaltet ist, in die Einkaufswagendaten; Anfordern (ACT 36) von Mitgliedskassendaten von einem externen Server (20) über die erste Netzschnittstelle;
nach Empfang eines Mitgliedsdatensatzes, der die Mitgliedskassendaten enthält, von dem externen Server, Schreiben (ACT 37) der Mitgliedskassendaten in entsprechende Einkaufswagendaten, die mit der Mitglieds-ID assoziiert sind, die in dem Mitgliedsdatensatz in dem ersten Speicher beinhaltet ist, wobei die Mitgliedskassendaten null oder mehrere Zahlungsverfahren beinhalten, die von dem Kunden verwendet werden und für den Kunden im Voraus eingestellt sind, wobei die null oder mehreren Zahlungsverfahren null oder mehrere von einer Kreditkartennummer und einem Identifizierungscode für elektronisches Geld sind;
Bestimmen (ACT 38), ob die Mitgliedskassendaten einen Identifizierungscode für elektronisches Geld beinhalten;
nach Bestimmen, dass die Mitgliedskassendaten einen Identifizierungscode für elektronisches Geld beinhalten, Übertragen (ACT 40) eines Saldoanforderungsbefehls, der den Identifizierungscode für elektronisches Geld beinhaltet, an einen Server für elektronisches Geld über die erste Netzschnittstelle;
nach Empfang, über die erste Netzschnittstelle, eines Datensatzes für elektronisches Geld, der Saldodaten von dem Server für elektronisches Geld beinhaltet, Schreiben (ACT 41) der Saldodaten in die Einkaufswagendaten;
Übertragen (ACT 42) des Genehmigungsantwortbefehls mit den Saldodaten an das mobile Terminal über die erste Netzschnittstelle;
nach Bestimmen, dass die Mitgliedskassendaten keinen Identifizierungscode für elektronisches Geld enthalten, Übertragen des Genehmigungsantwortbefehls an das mobile Terminal ohne die Saldodaten über die erste Netzschnittstelle (54);
nach Empfang der ersten Benachrichtigung von dem mobilen Terminal, Abrufen, aus dem ersten Speicher, der Einkaufswagendaten, die mit der Mitglieds-ID assoziiert sind, die in der ersten Benachrichtigung beinhaltet ist, und Durchführen eines Abrechnungsprozesses basierend auf den Einkaufswagendaten,
wobei der erste Prozessor ferner ein Berechnen eines gesamten Zahlungsbetrags der von dem Kunden gekauften Waren basierend auf dem Warenregistrierungsbefehl nach Erhalt des Warenregistrierungsbefehls von dem mobilen Terminal durch Folgendes durchführt:
Abrufen (ACT 52) der Mitglieds-ID aus dem Warenregistrierungsbefehl, Abrufen von Einkaufswagendaten, die mit der Mitglieds-ID assoziiert sind;
Erstellen (ACT 53) von Kaufwarendaten basierend auf dem Warencode, der in dem Warenregistrierungsbefehl beinhaltet ist, und Schreiben der Kaufwarendaten in die abgerufenen Einkaufswagendaten;
Aktualisieren (ACT 54) eines zu zahlenden Betrags durch Addieren einer Zwischensumme und Steuer der Kaufwarendaten zu dem Gesamtbetrag von Waren, der in den abgerufenen Einkaufsdaten geschrieben sind, Bestimmen, ob der Identifizierungscode für elektronisches Geld in den Einkaufswagendaten in dem ersten Speicher gespeichert ist,
nach Bestimmen (ACT 55), dass der Identifizierungscode für elektronisches Geld nicht in den Einkaufswagendaten gespeichert ist, Übertragen (ACT 56) des registrierten Antwortbefehls ohne Saldodaten an das mobile Terminal über die erste Netzschnittstelle (54),
nach Bestimmen, dass der Identifizierungscode für elektronisches Geld in den Einkaufswagendaten gespeichert ist, Aktualisieren (ACT 57) der Saldodaten der Einkaufswagendaten, indem die Saldodaten aktualisiert werden, sodass die Zwischensumme und Steuer der Kaufwarendaten von dem Saldo abgezogen werden; und
Übertragen (ACT 58) des Genehmigungsantwortbefehls mit den aktualisierten Saldodaten an das mobile Terminal über die erste Netzschnittstelle (54).

7. Verfahren nach Anspruch 6, ferner umfassend: nach Empfangen der ersten Benachrichtigung, Bestimm, dass die Mitgliedskassendaten zwei Zahlungsverfahren beinhalten, und Bestimmen, dass der Saldo, der durch die in den Einkaufswagendaten gespeicherten Saldodaten angegeben wird, größer als oder gleich wie Null ist, wobei der erste Prozessor ferner die erste Netzschnittstelle steuert, um eine Anforderung an das mobile Terminal zu übertragen, eines der Zahlungsverfahren auszuwählen, und nach Empfangen der Anforderung, eines der Zahlungsverfahren auszuwählen, wobei der zweite Prozessor einen Zahlungsauswahlbildschirm anzeigt, um den Kunden aufzufordern, eines der Zahlungsverfahren auszuwählen, Empfangen, durch das Berührungsfeld, einer dritten Eingabe eines Auswählens eines der Zahlungsverfahren, wobei der zweite Prozessor dritte Daten, die das ausgewählte Zahlungsverfahren angeben, über die zweite Netzschnittstelle (74) an die Informationsverarbeitungsvorrichtung überträgt,
wobei der Abrechnungsprozess ferner basierend auf dem ausgewählten Zahlungsverfahren durchgeführt wird.

## Revendications

1. Système d'encaissement, comprenant :
un appareil de traitement d'informations (50) qui comprend
un premier processeur (51) ;
une première mémoire (52) ; et
une première interface de réseau (54) ;
un terminal mobile (TM), fourni sur un panier d'achat, qui comprend
une deuxième mémoire (72) ;
un dispositif d'entrée configuré de manière à recevoir une première entrée de premières données d'une marchandise devant être achetée par un client, et une deuxième entrée qui est une instruction d'encaissement pour exécuter un processus d'encaissement, le dispositif d'entrée étant constitué d'un panneau tactile (75) configuré de manière à recevoir la première entrée de premières données de marchandises auxquelles un symbole de code n'est pas fixé, ainsi que la deuxième entrée, et d'un scanneur configuré de manière à recevoir la première entrée de premières données de marchandises auxquelles un symbole de code est fixé, le panneau tactile étant en outre configuré en tant qu'un dispositif d'affichage ;
une deuxième interface de réseau (74) ; et
un deuxième processeur (71) configuré de manière à :
amener (ACTION 1) le panneau tactile (75) à afficher un écran de connexion ;
attendre (ACTION 2) une opération de connexion ;
suite à la réception de l'opération de connexion, commander (ACTION 3), à la deuxième interface de réseau, de transmettre une instruction de connexion, à l'appareil de traitement d'informations (50), l'instruction de connexion incluant un identifiant, ID, de membre ;
attendre (ACTION 4) une instruction de réponse en provenance de l'appareil de traitement d'informations (50) ;
lorsque l'instruction de réponse est une instruction de réponse d'approbation, stocker (ACTION 5), dans la deuxième mémoire (72), l'identifiant, ID, de membre inclus dans l'instruction de connexion, afficher (ACTION 6) un écran d'enregistrement de marchandises sur le panneau tactile (75) configuré de manière à mettre en oeuvre l'enregistrement de marchandises par l'utilisateur, confirmer (ACTION 7) si des données de solde sont incluses dans l'instruction de réponse d'approbation, et suite à une détermination selon laquelle les données de solde sont incluses dans l'instruction de réponse d'approbation, afficher (ACTION 8) le solde sur une partie de l'écran d'enregistrement de marchandises ;
suite à une détermination (ACTION 9) selon laquelle l'enregistrement de marchandises a été mis en oeuvre par le client, commander, à la deuxième interface de réseau, de transmettre une instruction d'enregistrement de marchandises, à l'appareil de traitement d'informations (50), l'instruction d'enregistrement de marchandises incluant l'identifiant, ID, de membre et le code de marchandise des marchandises enregistrées, l'instruction d'enregistrement de marchandises étant par conséquent la première entrée ;
recevoir une instruction de réponse enregistrée, en provenance de l'appareil de traitement d'informations (50), suite à la réception de l'instruction de réponse enregistrée, mettre à jour l'écran d'enregistrement de marchandises affiché sur le panneau tactile (75), dans laquelle la mise à jour de l'écran d'enregistrement de marchandises affiché sur le panneau tactile comprend le fait de : vérifier si des données de solde mises à jour sont incluses ou non dans l'instruction de réponse enregistrée, et, lorsque des données de solde mises à jour sont incluses dans l'instruction de réponse enregistrée, commander, au dispositif d'affichage, d'afficher un solde mis à jour de la monnaie électronique possédée par le client sur ladite partie de l'écran d'enregistrement de marchandises ; lors d'une détermination (ACTION 10) selon laquelle l'instruction d'enregistrement de marchandises n'a pas été mise en oeuvre, suite à une détermination selon laquelle la deuxième entrée a été mise en oeuvre, commander, à la deuxième interface de réseau, de transmettre (ACTION 11) une première notification incluant l'identifiant, ID, de membre, à l'appareil de traitement d'informations,
dans lequel le premier processeur (51) est configuré de manière à :
suite à la réception de l'instruction de connexion, en provenance du terminal mobile, par l'intermédiaire de la première interface de réseau, récupérer (ACTION 31) l'identifiant, ID, de membre à partir de l'instruction de connexion ;
mettre en oeuvre (ACTION 32) une authentification d'un membre identifié par l'identifiant, ID, de membre, le premier processeur étant en outre configuré de manière à :
suite à la réussite de l'authentification (ACTION 33), sécuriser (ACTION 35) une zone de mémoire pour des données de panier d'achat dans la première mémoire ;
écrire l'identifiant, ID, de membre, inclus dans l'instruction de connexion, dans les données de panier d'achat ;
demander (ACTION 36) des données d'encaissement de membre, à un serveur externe (20), par l'intermédiaire de la première interface de réseau (54) ;
suite à la réception, par l'intermédiaire de la première interface de réseau, d'un enregistrement de membre contenant les données d'encaissement de membre provenant du serveur externe, écrire (ACTION 37) les données d'encaissement de membre dans des données de panier d'achat correspondantes associées à l'identifiant, ID, de membre inclus dans l'enregistrement de membre, dans la première mémoire, les données d'encaissement de membre n'incluant aucun ou incluant plusieurs modes de paiement utilisés par le client et définis pour le client à l'avance, ledit aucun ou lesdits plusieurs modes de paiement ne correspondant à aucun ou correspondant à plusieurs parmi un numéro de carte de crédit et un code d'identification de monnaie électronique ;
déterminer (ACTION 38) si les données d'encaissement de membre incluent un code d'identification de monnaie électronique ;
suite à une détermination selon laquelle les données d'encaissement de membre incluent un code d'identification de monnaie électronique, transmettre (ACTION 40) une instruction de demande de solde incluant le code d'identification de monnaie électronique, à un serveur de monnaie électronique, par l'intermédiaire de la première interface de réseau ;
suite à la réception, par l'intermédiaire de la première interface de réseau, d'un enregistrement de monnaie électronique contenant des données de solde, en provenance du serveur de monnaie électronique, écrire (ACTION 41) les données de solde dans les données de panier d'achat ;
transmettre (ACTION 42) l'instruction de réponse d'approbation avec les données de solde, au terminal mobile, par l'intermédiaire de la première interface de réseau (54) ;
suite à une détermination selon laquelle les données d'encaissement de membre ne contiennent pas de code d'identification de monnaie électronique, transmettre l'instruction de réponse d'approbation au terminal mobile, sans les données de solde, par l'intermédiaire de la première interface de réseau (54) ;
suite à la réception de la première notification en provenance du terminal mobile,
récupérer, à partir de la première mémoire, les données de panier d'achat associées à l'identifiant, ID, de membre inclus dans la première notification, et mettre en oeuvre un processus d'encaissement sur la base des données de panier d'achat ;
le premier processeur mettant en outre en oeuvre le calcul (ACTION 51) d'un montant total de paiement des marchandises achetées par le client, sur la base de l'instruction d'enregistrement de marchandises, suite à la réception de l'instruction d'enregistrement de marchandises en provenance du terminal mobile :
en récupérant (ACTION 52) l'identifiant, ID, de membre à partir de l'instruction d'enregistrement de marchandises, et en récupérant les données de panier d'achat associées à l'identifiant, ID, de membre ;
en créant (ACTION 53) des données de marchandises d'achat sur la base du code de marchandise inclus dans l'instruction d'enregistrement de marchandises, et en écrivant les données de marchandises d'achat dans les données de panier d'achat récupérées ;
en mettant à jour (ACTION 54) un montant à payer en ajoutant un sous-total et une taxe des données de marchandises d'achat au montant total de marchandises écrit dans les données de panier d'achat récupérées ;
en déterminant (ACTION 55) si le code d'identification de monnaie électronique est stocké dans les données de panier d'achat dans la première mémoire ;
suite à une détermination selon laquelle le code d'identification de monnaie électronique n'est pas stocké dans les données de panier d'achat, en transmettant (ACTION 56) l'instruction de réponse enregistrée, sans données de solde, au terminal mobile, par l'intermédiaire de la première interface de réseau (54),
suite à une détermination selon laquelle le code d'identification de monnaie électronique est stocké dans les données de panier d'achat, en mettant à jour (ACTION 57) les données de solde des données de panier d'achat, en mettant à jour les données de solde de sorte que le sous-total et la taxe des données de marchandises d'achat sont soustraits du solde ; et
en transmettant (ACTION 58) l'instruction de réponse enregistrée avec les données de solde mises à jour, au terminal mobile, par l'intermédiaire de la première interface de réseau (54).

2. Système d'encaissement selon la revendication 1, dans lequel, suite à la réception (ACTION 24) de la première notification, à la détermination selon laquelle les données d'encaissement de membre incluent deux modes de paiement, et à la détermination (ACTION 86) selon laquelle le solde indiqué par les données de solde stockées dans les données de panier d'achat est supérieur ou égal à zéro, le premier processeur est en outre configuré de manière à commander, à la première interface de réseau, de transmettre (ACTION 87), au terminal mobile, une demande de sélection de l'un des modes de paiement, et, suite à la réception de la demande de sélection de l'un des modes de paiement, le deuxième processeur est configuré de manière à afficher (ACTION 26) un écran de sélection de paiement pour inviter le client à sélectionner l'un des modes de paiement, le panneau tactile est configuré de manière à recevoir une troisième entrée de sélection (ACTION 27) de l'un des modes de paiement, suite à la réception de la troisième entrée, le deuxième processeur transmet (ACTION 28) des troisièmes données indiquant le mode de paiement sélectionné, à l'appareil de traitement d'informations, par l'intermédiaire de la deuxième interface de réseau (74), et le processus d'encaissement est mis en oeuvre au moyen d'un mode de paiement sélectionné indiqué par les troisièmes données.

3. Système d'encaissement selon la revendication 1 ou 2, dans lequel le premier processeur est configuré de manière à mettre en oeuvre le processus d'encaissement, par le biais de la monnaie électronique, uniquement lorsque le solde est supérieur au montant total de paiement des marchandises achetées par le client.

4. Système d'encaissement selon l'une quelconque des revendications 1 à 3, dans lequel, suite à l'achèvement du processus d'encaissement, le premier processeur est configuré de manière à commander, à la première interface de réseau, de transmettre une deuxième notification au terminal mobile.

5. Système d'encaissement selon la revendication 4, dans lequel, suite à la réception de la deuxième notification, le deuxième processeur est configuré de manière à commander, au dispositif d'affichage, d'afficher un écran indiquant que le processus d'encaissement a été achevé.

6. Procédé mis en oeuvre par le système d'encaissement (1) selon la revendication 1, le procédé comprenant le fait de :
par le biais du deuxième processeur du terminal mobile :
amener (ACTION 1) le panneau tactile à afficher un écran de connexion ;
attendre (ACTION 2) une opération de connexion ;
suite à la réception de l'opération de connexion, commander (ACTION 3) à la deuxième interface de réseau de transmettre une instruction de connexion à l'appareil de traitement d'informations (50), l'instruction de connexion incluant un identifiant, ID, de membre ;
attendre (ACTION 4) une instruction de réponse en provenance de l'appareil de traitement d'informations (50) ;
lorsque l'instruction de réponse est une instruction de réponse d'approbation, stocker (ACTION 5), dans la deuxième mémoire, l'identifiant, ID, de membre inclus dans l'instruction de connexion ;
afficher (ACTION 6), sur le panneau tactile, un écran d'enregistrement de marchandises pour mettre en oeuvre l'enregistrement de marchandises par l'utilisateur, confirmer (ACTION 7) si des données de solde sont incluses dans l'instruction de réponse d'approbation, et suite à une détermination selon laquelle les données de solde sont incluses dans l'instruction de réponse d'approbation, afficher (ACTION 8) le solde sur une partie de l'écran d'enregistrement de marchandises ;
suite à une détermination (ACTION 9) selon laquelle l'enregistrement de marchandises a été mis en oeuvre par le client, commander, à la deuxième interface de réseau, de transmettre une instruction d'enregistrement de marchandises à l'appareil de traitement d'informations (50), l'instruction d'enregistrement de marchandises incluant l'identifiant, ID, de membre et le code de marchandise des marchandises enregistrées ;
recevoir une instruction de réponse enregistrée en provenance de l'appareil de traitement d'informations (50), suite à la réception de l'instruction de réponse enregistrée, mettre à jour l'écran d'enregistrement de marchandises affiché sur le panneau tactile (75), dans laquelle la mise à jour de l'écran d'enregistrement de marchandises affiché sur le panneau tactile comprend le fait de : vérifier si des données de solde mises à jour sont incluses ou non dans l'instruction de réponse enregistrée, et, lorsque des données de solde mises à jour sont incluses dans l'instruction de réponse enregistrée, commander au dispositif d'affichage d'afficher un solde mis à jour de la monnaie électronique possédée par le client sur ladite partie de l'écran d'enregistrement de marchandises ;
lors d'une détermination (ACTION 10) selon laquelle l'instruction d'enregistrement de marchandises n'a pas été mise en oeuvre, suite à une détermination selon laquelle la deuxième entrée a été mise en oeuvre, commander, à la deuxième interface de réseau, de transmettre (ACTION 11) une première notification incluant l'identifiant, ID, de membre, à l'appareil de traitement d'informations,
par le biais du premier processeur de l'appareil de traitement d'informations :
suite à la réception de l'instruction de connexion en provenance du terminal mobile par l'intermédiaire de la première interface de réseau, récupérer (ACTION 31) l'identifiant, ID, de membre à partir de l'instruction de connexion ;
mettre en oeuvre (ACTION 32) une authentification d'un membre identifié par l'identifiant, ID, de membre ;
suite à la réussite de l'authentification (ACTION 33), sécuriser (ACTION 35) une zone de mémoire pour des données de panier d'achat dans la première mémoire ;
écrire l'identifiant, ID, de membre, inclus dans l'instruction de connexion, dans les données de panier d'achat ;
demander (ACTION 36) des données d'encaissement de membre, à un serveur externe (20), par l'intermédiaire de la première interface de réseau ;
suite à la réception d'un enregistrement de membre contenant les données d'encaissement de membre provenant du serveur externe, écrire (ACTION 37) les données d'encaissement de membre dans des données de panier d'achat correspondantes associées à l'identifiant, ID, de membre inclus dans l'enregistrement de membre, dans la première mémoire, les données d'encaissement de membre n'incluant aucun ou incluant plusieurs modes de paiement utilisés par le client et définis pour le client à l'avance, ledit aucun ou lesdits plusieurs modes de paiement ne correspondant à aucun ou correspondant à plusieurs parmi un numéro de carte de crédit et un code d'identification de monnaie électronique ;
déterminer (ACTION 38) si les données d'encaissement de membre incluent un code d'identification de monnaie électronique ;
suite à une détermination selon laquelle les données d'encaissement de membre incluent un code d'identification de monnaie électronique, transmettre (ACTION 40) une instruction de demande de solde incluant le code d'identification de monnaie électronique, à un serveur de monnaie électronique, par l'intermédiaire de la première interface de réseau ;
suite à la réception, par l'intermédiaire de la première interface de réseau, d'un enregistrement de monnaie électronique contenant des données de solde, en provenance du serveur de monnaie électronique, écrire (ACTION 41) les données de solde dans les données de panier d'achat ;
transmettre (ACTION 42) l'instruction de réponse d'approbation avec les données de solde, au terminal mobile, par l'intermédiaire de la première interface de réseau ;
suite à une détermination selon laquelle les données d'encaissement de membre ne contiennent pas de code d'identification de monnaie électronique, transmettre l'instruction de réponse d'approbation au terminal mobile, sans les données de solde, par l'intermédiaire de la première interface de réseau (54) ;
suite à la réception de la première notification en provenance du terminal mobile,
récupérer, à partir de la première mémoire, les données de panier d'achat associées à l'identifiant, ID, de membre inclus dans la première notification, et mettre en oeuvre un processus d'encaissement sur la base des données de panier d'achat ;
le premier processeur mettant en outre en oeuvre le calcul d'un montant total de paiement des marchandises achetées par le client, sur la base de l'instruction d'enregistrement de marchandises, suite à la réception de l'instruction d'enregistrement de marchandises en provenance du terminal mobile :
en récupérant (ACTION 52) l'identifiant, ID, de membre à partir de l'instruction d'enregistrement de marchandises, et en récupérant les données de panier d'achat associées à l'identifiant, ID, de membre ;
en créant (ACTION 53) des données de marchandises d'achat sur la base du code de marchandise inclus dans l'instruction d'enregistrement de marchandises, et en écrivant les données de marchandises d'achat dans les données de panier d'achat récupérées ;
en mettant à jour (ACTION 54) un montant à payer en ajoutant un sous-total et une taxe des données de marchandises d'achat au montant total de marchandises écrit dans les données de panier d'achat récupérées, et en déterminant si le code d'identification de monnaie électronique est stocké dans les données de panier d'achat dans la première mémoire ;
suite à une détermination (ACTION 55) selon laquelle le code d'identification de monnaie électronique n'est pas stocké dans les données de panier d'achat, en transmettant (ACTION 56) l'instruction de réponse enregistrée, sans données de solde, au terminal mobile, par l'intermédiaire de la première interface de réseau (54) ;
suite à une détermination selon laquelle le code d'identification de monnaie électronique est stocké dans les données de panier d'achat, en mettant à jour (ACTION 57) les données de solde des données de panier d'achat, en mettant à jour les données de solde de sorte que le sous-total et la taxe des données de marchandises d'achat sont soustraits du solde ; et
en transmettant (ACTION 58) l'instruction de réponse enregistrée avec les données de solde mises à jour, au terminal mobile, par l'intermédiaire de la première interface de réseau (54).

7. Procédé selon la revendication 6, comprenant en outre le fait de : lors de la réception de la première notification, déterminer que les données d'encaissement de membre incluent deux modes de paiement et déterminer que le solde indiqué par les données de solde stockées dans les données de panier d'achat est supérieur ou égal à zéro, le premier processeur commandant, à la première interface de réseau, de transmettre, au terminal mobile, une demande de sélection de l'un des modes de paiement, et, suite à la réception de la demande de sélection de l'un des modes de paiement, le deuxième processeur affichant un écran de sélection de paiement pour inviter le client à sélectionner l'un des modes de paiement, et recevant, par le biais du panneau tactile, une troisième entrée de sélection de l'un des modes de paiement, le deuxième processeur transmettant des troisièmes données indiquant le mode de paiement sélectionné, à l'appareil de traitement d'informations, par l'intermédiaire de la deuxième interface de réseau (74), dans lequel le processus d'encaissement est en outre mis en oeuvre sur la base du mode de paiement sélectionné.
